# EUROPEAN PATENT SPECIFICATION

(11) **EP 3 043 037 B1**
(45) Date of publication and mention of the grant of the patent: **29.08.2018**
(21) Application number: 14842333.8
(22) Date of filing: 05.09.2014
(51) Int. Cl.: F01N 3/023, F01N 3/035, F01N 3/18, F01N 3/20, F01N 9/00, F01N 3/10, F01N 3/08

(54) **EXHAUST GAS POST-PROCESSING APPARATUS AND METHOD FOR SULFUR OXIDE REMOVAL**
ABGASNACHBEARBEITUNGSVORRICHTUNG UND VERFAHREN ZUM ENTFERNEN VON SCHWEFELOXID
APPAREIL ET PROCÉDÉ DE POST-TRAITEMENT DE GAZ D'ÉCHAPPEMENT POUR ÉLIMINATION D'OXYDE DE SOUFRE

(30) Priority: 05.09.2013 KR 20130106585
(43) Date of publication of application: 13.07.2016
(73) Proprietor: Doosan Infracore Co., Ltd., Incheon 401-702 (KR)
(72) Inventor: WON, Jun Hee, Seoul 122-755 (KR); CHOI, Nam Il, Incheon 406-730 (KR); KIM, Jae Seong, Incheon 405-825 (KR)
(74) Representative: Isarpatent
(86) International application number: PCT/KR2014/008389
(87) International publication number: WO 2015/034314

(56) References cited:
- EP-A1- 1 491 736
- JP-A- 2008 144 645
- KR-A- 20090 063 901
- KR-A- 20120 011 563

## Description

### FIELD OF THE DISCLOSURE

The present disclosure relates to exhaust gas post-processing for removing sulfur oxides, and more particularly, to an apparatus and a method of post-processing exhaust gas for removing sulfur oxides, which are capable of removing sulfur oxides (SOx) that is produced and stacked in a catalytic device (diesel oxidation catalyst (DOC) and selective catalytic reduction (SCR)) equipped on the apparatus for post-processing exhaust gas during a process of purifying exhaust gas.

### BACKGROUND OF THE DISCLOSURE

In general, when fuel is combusted in a diesel internal combustion engine using oil fuel, exhaust gas is produced. The exhaust gas contains a harmful material having a gas phase, such as a carbon monoxide (CO), hydrocarbon (HC), and a nitrogen oxide (NOx). As a technology for removing the harmful material, an exhaust gas post-processing apparatus is used. A catalytic device is used in the exhaust gas post-processing apparatus. The catalytic device includes a selective catalytic reduction (SCR) device and a diesel oxidation catalyst (DOC) device.

The SCR is a technology for oxidizing a nitrogen monoxide (NO) in the exhaust gas to a nitrogen oxide (NO₂) by using a dielectric barrier discharge (DBD), and then removing the nitrogen oxide (NO₂) by adding a urea-aqueous solution.

The DOC is a technology for oxidizing a hydrocarbon compound (HC) and a carbon monoxide (CO) in the exhaust gas to harmless water (H₂O) and carbon dioxide (CO₂).

In the meantime, a part of an oxidation reaction generable in the catalytic device (DOC and SRC) may produce an undesirable product, and a reverse effect may be actually generated in an effect of a catalyst. For example, sulfur oxides may be produced and stacked on the catalytic device. More particularly, a sulfur dioxide (SO₂) is oxidized to a sulfur trioxide (SO₃) and the sulfur trioxide (SO₃) is bonded with vapor, so that sulfuric acid (H₂SO₄) in a gas state may be produced. The sulfuric acid vapor is bonded to other vapor to produce sulfuric acid particles detected as particles when the exhaust of the total particulate matters (PM) from an engine is evaluated. The sulfur oxides may hinder an oxidation activity of the catalytic device. Accordingly, it is necessary to appropriately remove the sulfur oxides.

In the meantime, in the existing technology for removing sulfur oxides, it is known that when a high temperature environment of 600°C or higher is created, a desulfurization process progresses.

However, in order to create a high temperature of 600°C or higher in the catalytic device, the large quantity of fuel needs to be injected for the high temperature, so that there is concern in that fuel waste becomes severe.

In the meantime, sulfur or sulfur oxides component may have a different adsorption and desorption characteristic with respect to a catalyst according to the kind of catalyst and the form of sulfur oxides. For example, under a specific temperature environment, a specific sulfur oxides is removed, but sulfur oxides having another characteristic may not be removed. Accordingly, a uniform regeneration and control when the catalytic device is regenerated has a limit in removing sulfur oxides. Patent literature 5 relates to a nitrogen oxide purification system having a direct reduced-type nitrogen oxide catalyst arranged in an exhaust-gas passage so a catalyst component reduces nitrogen oxide to nitrogen when the oxygen concentration in engine exhaust gas is high. The catalyst component is oxidized during the process, and is reduced when the oxygen concentration in the exhaust gas reduces. NOx purification system has a direct reduced-type NOx catalyst arranged in an exhaust-gas passage so a catalyst component reduces NOx to nitrogen when the oxygen concentration in engine exhaust gas is high. The catalyst component is oxidized during the process, and is reduced when the oxygen concentration in the exhaust gas reduces. The NOx purification system has a first sulfur purge control means which performs a first sulfur purging operation by lowering the oxygen concentration in exhaust gas and raising the exhaust-temperature to a temperature above the sulfur purge temperature, when the exhaust-temperature becomes larger than a predetermined fixed temperature during usual operation.

### Literature of Related Art:

Patent Literature 1: Korean Patent Application Laid-Open No. 10-2008-0021123 (March 6, 2008)
Patent Literature 2: Korean Patent Application Laid-Open No. 10-2010-0116898 (November 2, 2010)
Patent Literature 3: Korean Patent Application Laid-Open No. 10-2006-0054423 (May 22, 2006)
Patent Literature 4: Korean Patent Application Laid-Open No. 10-2006-0002178 (January 9, 2006)
Patent Literature 5: European Patent Application No. 14 91736 A1 (December 29, 2004)

### SUMMARY

An object of the present disclosure is to provide an apparatus for post-processing exhaust gas for removing sulfur oxides, which is capable of removing sulfur oxides by differently controlling a regeneration cycle and a desorption condition according to the kind of sulfur or sulfur oxides adsorbed to a catalytic device when creating a high temperature environment so that a desulfurization operation is performed by injecting fuel to the apparatus for post-processing exhaust gas.

A technical object to be achieved in the present disclosure is not limited to the aforementioned technical objects, and another not-mentioned technical object will be obviously understood from the description below by those with ordinary skill in the art to which the present disclosure pertains.

The solution to the technical object is defined by the appended claims.

Disclosed is an apparatus for post-processing exhaust gas for removing sulfur oxides, the apparatus including: an input unit configured to receive one or more elements of operation information of a vehicle among an engine operation time, an engine fuel consumption quantity, a vehicle trip distance, and sulfur oxides produced quantity; a memory unit configured to store a first operation information value for processing sulfur oxides and a second operation information value for processing sulfur oxides, wherein the first operation information value and the second operation information value are generated by evaluating the operation information received from the input unit; a first processing unit configured to determine whether the first operation information value stored in the memory unit reaches a predetermined first reference value, and command a low temperature control when the first operation information value reaches the first reference value; a second processing unit configured to determine whether the second operation information value stored in the memory unit reaches a predetermined second reference value, and command a high temperature control when the second operation information value reaches the predetermined second reference value; and sulfur oxides removal operating unit configured to remove a first sulfur oxides by heating a catalytic device under a first temperature condition when the low temperature control command is generated from the first processing unit, and remove the first sulfur oxides and a second sulfur oxides by heating the catalytic device under a second temperature condition when the high temperature control command is generated from the second processing unit.

The first processing unit may initialize the first operation information value of the memory unit after the low temperature control command is generated, and the second processing unit may initialize the second operation information value of the memory unit after the high temperature control command is generated.

When the second processing unit initializes the second operation information value of the memory unit, the second processing unit may initialize the first operation information value of the memory unit together.

In the sulfur oxides removal operating unit, the first temperature condition may be 400°C or higher and the second temperature condition may be 600°C or higher.

The predetermined first reference value may be smaller than the second reference value.

The apparatus may further include a manual control unit configured to generate a high temperature control command, in which when the high temperature control command is generated from the manual control unit, the first sulfur oxides and the second sulfur oxides are removed by heating the catalytic device under the second temperature condition, and the first operation information value and the second operation information value of the memory unit are initialized.

The first sulfur oxides may include ammonium sulfate ((NH₄)₂SO₄), and the second sulfur oxides may include copper sulfate (CuSO₄).

In order to solve the technical problem, another exemplary embodiment of the present disclosure provides a method of post-processing exhaust gas for removing sulfur oxides, the method including: an input operation of receiving one or more elements of operation information of a vehicle among an engine operation time, an engine fuel consumption quantity, a vehicle trip distance, and sulfur oxides produced quantity from an input unit; an evaluating operation of generating a first operation information value for processing sulfur oxides and a second operation information value for processing sulfur oxides by evaluating the operation information received from the input operation; a first command operation of determining whether the first operation information value evaluated in the evaluating operation reaches a predetermined first reference value, and commanding a low temperature control when the first operation information value reaches the predetermined first reference value; a second command operation of determining whether the second operation information value evaluated in the evaluating operation reaches a predetermined second reference value, and commanding a high temperature control when the second operation information value reaches the predetermined second reference value; a first removal operation of removing a first sulfur oxides by heating a catalytic device under a first temperature condition when the low temperature control command is generated in the first command operation; and a second removal operation of removing the first sulfur oxides and a second sulfur oxides by heating the catalytic device under a second temperature condition when a high temperature control command is generated in the second command operation.

The method may further include: initializing the first operation information value after the low temperature control command is generated; and initializing the second operation information value after the high temperature control command is generated.

When the second operation information value is initialized, the first operation information value may be initialized together.

When the received operation information is the engine operation time, the second reference value may be set to a range from 1.5 times to 20 times the first reference value.

When the received operation information is the engine fuel consumption quantity, the second reference value may be set to a range from 1.5 times to 10 times the first reference value.

When the received operation information is the vehicle trip distance, the second reference value may be set to a range from 1.5 times to 5 times the first reference value.

When the received operation information is the sulfur oxides produced quantity, the first reference value may be sulfur oxides storage quantity of a DOC or a first sulfur oxides storage quantity, and the second reference value may be a second sulfur oxides storage quantity.

The first temperature condition may be 400°C or higher and the second temperature condition may be 600°C or higher.

The predetermined first reference value may be smaller than the second reference value.

A manual control unit generating a high temperature control command may be further included, and the method may further include when the high temperature control command is generated from the manual control unit, removing the first sulfur oxides and the second sulfur oxides by heating the catalytic device under the second temperature condition, and initializing the first operation information value and the second operation information value.

The first sulfur oxides may include ammonium sulfate ((NH₄)₂SO₄), and the second sulfur oxides may include copper sulfate (CuSO₄).

In order to solve the technical problem, another exemplary embodiment of the present disclosure provides an apparatus for post-processing exhaust gas for removing sulfur oxides, the apparatus including: a first time processing unit 212 configured to receive information on an engine operation time 110 about a degree of time for which an engine is operated, be set with a short time reference value 214 and a long time reference value 218, evaluate the information on the engine operation time 110, determine whether the evaluated value reaches the short time reference value 214, and generate a low temperature control command when the evaluated value reaches the short time reference value 214; and a second time processing unit 216 configured to evaluate the information on the engine operation time 110, determine whether the evaluated value reaches the long time reference value 218, and generate a high temperature control command when the evaluated value reaches the long time reference value 218, in which when the low temperature control command is generated, the apparatus performs an operation of removing the sulfur oxides at a relatively low temperature compared to the high temperature control command and initializes the information on the engine operation time 110 evaluated in the first time processing unit 212, and when the high temperature control command is generated, the apparatus performs an operation of removing the sulfur oxides at a relatively high temperature compared to the low temperature control command and initializes the information on the engine operation time 110 evaluated in the second time processing unit 216.

In order to solve the technical problem, another exemplary embodiment of the present disclosure provides an apparatus for post-processing exhaust gas for removing sulfur oxides, the apparatus including: a first fuel quantity processing unit 222 configured to receive information on an engine fuel consumption quantity 120 about a degree of fuel consumed by an engine, be set with a small quantity reference value 224 and a large quantity reference value 228, evaluate the information on the engine fuel consumption quantity 120, determine whether the evaluated value reaches the small quantity reference value 224, and generate a low temperature control command when the evaluated value reaches the small quantity reference value 224; and a second fuel quantity processing unit 226 configured to evaluate the information on the engine fuel consumption quantity 120, determine whether the evaluated value reaches the large quantity reference value 228, and generate a high temperature control command when the evaluated value reaches the large quantity reference value 228, in which when the low temperature control command is generated, the apparatus performs an operation of removing the sulfur oxides at a relatively low temperature compared to the high temperature control command and initializes the information on the engine fuel consumption quantity 120 evaluated in the first fuel quantity processing unit 222, and when the high temperature control command is generated, the apparatus performs an operation of removing the sulfur oxides at a relatively high temperature compared to the low temperature control command and initializes the information on the engine fuel consumption quantity 120 evaluated in the second fuel quantity processing unit 226.

In order to solve the technical problem, another exemplary embodiment of the present disclosure provides an apparatus for post-processing exhaust gas for removing sulfur oxides, the apparatus including: a first distance processing unit 232 configured to receive information on a vehicle trip distance 130 about a degree of a trip distance of a vehicle, be set with a short distance reference value 234 and a long distance reference value 238, evaluate the information on the vehicle trip distance 130, determine whether the evaluated value reaches the short distance reference value 234, and generate a low temperature control command when the evaluated value reaches the short distance reference value 234; and a second distance processing unit 236 configured to evaluate the information on the vehicle trip distance 130, determine whether the evaluated value reaches the long distance reference value 238, and generate a high temperature control command when the evaluated value reaches the long distance reference value 238, in which when the low temperature control command is generated, the apparatus performs an operation of removing the sulfur oxides at a relatively low temperature compared to the high temperature control command and initializes the information on the vehicle trip distance 130 evaluated in the first distance processing unit 232, and when the high temperature control command is generated, the apparatus performs an operation of removing the sulfur oxides at a relatively high temperature compared to the low temperature control command and initializes the information on the vehicle trip distance 130 evaluated in the second distance processing unit 236.

In order to solve the technical problem, another exemplary embodiment of the present disclosure provides an apparatus for post-processing exhaust gas for removing sulfur oxides, the apparatus including: a DOC sulfur oxides storage quantity calculating unit 252 configured to be set with sulfur oxides quantity reference value 256 and first and second sulfur oxides quantity reference values 266a and 266b, receive information on sulfur oxides produced quantity 140 about a degree of quantity of sulfur oxides produced, receive a DOC inlet exhaust gas temperature 142, and calculate a storage quantity of sulfur oxides produced in a DOC; sulfur oxides quantity processing unit 258 configured to evaluate the storage quantity of sulfur oxides, determine whether the evaluated storage quantity of sulfur oxides reaches the sulfur oxides quantity reference value 256, and generate a low temperature control command when the storage quantity of sulfur oxides reaches the sulfur oxides quantity reference value 256; a first sulfur oxides storage quantity processing unit 266a configured to receive the information on the sulfur oxides produced quantity 140, receive the storage quantity of sulfur oxides, receive an SCR inlet exhaust gas temperature 144, and calculate a storage quantity of a first sulfur oxides produced in an SCR; a first sulfur oxides quantity processing unit 268a configured to evaluate the storage quantity of the first sulfur oxides, determine whether the evaluated storage quantity of the first sulfur oxides reaches the first sulfur oxides quantity reference value 266a, and generate a low temperature control command when the evaluated storage quantity of the first sulfur oxides reaches the first sulfur oxides quantity reference value 266a; a second sulfur oxides storage quantity processing unit 266b configured to receive information on the sulfur oxides produced quantity 140, receive the storage quantity of sulfur oxides, receive the SCR inlet exhaust gas temperature 144, and calculate a storage quantity of a second sulfur oxides produced in the SCR; and a second sulfur oxides quantity processing unit 268b configured to evaluate the storage quantity of the second sulfur oxides, determine whether the evaluated storage quantity of the second sulfur oxides reaches the second sulfur oxides quantity reference value 266b, and generate a high temperature control command when the evaluated storage quantity of the second sulfur oxides reaches the second sulfur oxides quantity reference value 266b, in which when the low temperature control command is generated, the apparatus performs an operation of removing the sulfur oxides at a relatively low temperature compared to the high temperature control command and initializes the information on the sulfur oxides produced quantity 140 evaluated in each of the sulfur oxides quantity processing unit 258 and the first sulfur oxides quantity processing unit 268a, and when the high temperature control command is generated, the apparatus performs an operation of removing the sulfur oxides at a relatively high temperature compared to the low temperature control command and initializes the information on the sulfur oxides produced quantity 140 evaluated in the second sulfur oxides quantity processing unit 268b.

In order to solve the technical problem, another exemplary embodiment of the present disclosure provides an apparatus for post-processing exhaust gas for removing sulfur oxides, the apparatus including: a first time processing unit 212 configured to receive information on an engine operation time 110 about a degree of time, for which an engine is operated, be set with a short time reference value 214 and a long time reference value 218, receive information on an engine fuel consumption quantity 120 about a degree of fuel consumed by the engine, be set with a small quantity reference value 224 and a large quantity reference value 228, evaluate the information on the engine operation time 110, determine whether the evaluated value reaches the short time reference value 214, and generate a low temperature control command when the evaluated value reaches the short time reference value 214; a second time processing unit 216 configured to evaluate the information on the engine operation time 110, determine whether the evaluated value reaches the long time reference value 218, and generate a high temperature control command when the evaluated value reaches the long time reference value 218; a first fuel quantity processing unit 222 configured to evaluate the information on the engine fuel consumption quantity 120, determine whether the evaluated value reaches the small quantity reference value 224, and generate the low temperature control command when the evaluated value reaches the small quantity reference value 224; and a second fuel quantity processing unit 226 configured to evaluate the information on the engine fuel consumption quantity 120, determine whether the evaluated value reaches the large quantity reference value 228, and generate the high temperature control command when the evaluated value reaches the large quantity reference value 228, in which when the low temperature control command is generated, the apparatus performs an operation of removing the sulfur oxides at a relatively low temperature compared to the high temperature control command and initializes the information on the engine operation time 110 evaluated in the first time processing unit 212 and the information on the engine fuel consumption quantity 120 evaluated in the first fuel quantity processing unit 222, and when the high temperature control command is generated, the apparatus performs an operation of removing the sulfur oxides at a relatively high temperature compared to the low temperature control command and initializes the information on the engine operation time 110 evaluated in the second time processing unit 216 and the information on the engine fuel consumption quantity 120 evaluated in the second fuel quantity processing unit 226.

In order to solve the technical problem, another exemplary embodiment of the present disclosure provides an apparatus for post-processing exhaust gas for removing sulfur oxides, the apparatus including: a first time processing unit 212 configured to receive information on an engine operation time 110 about a degree of time, for which an engine is operated, be set with a short time reference value 214 and a long time reference value 218, receive information on a vehicle trip distance 130 about a degree of a trip distance of a vehicle, be set with a short distance reference value 234 and a long distance reference value 238, evaluate the information on the engine operation time 110, determine whether the evaluated value reaches the short time reference value 214, and generate a low temperature control command when the evaluated value reaches the short time reference value 214; a second time processing unit 216 configured to evaluate the information on the engine operation time 110, determine whether the evaluated value reaches the long time reference value 218, and generate a high temperature control command when the evaluated value reaches the long time reference value 218; a first distance processing unit 232 configured to evaluate the information on the vehicle trip distance 130, determine whether the evaluated value reaches the short distance reference value 234, and generate a low temperature control command when the evaluated value reaches the short distance reference value 234; and a second distance processing unit 236 configured to evaluate the information on the vehicle trip distance 130, determine whether the evaluated value reaches the long distance reference value 238, and generate a high temperature control command when the evaluated value reaches the long distance reference value 238, in which when the low temperature control command is generated, the apparatus performs an operation of removing the sulfur oxides at a relatively low temperature compared to the high temperature control command and initializes the information on the engine operation time 110 evaluated in the first time processing unit 212 and the information on the vehicle trip distance 130 evaluated in the first distance processing unit 232, and when the high temperature control command is generated, the apparatus performs an operation of removing the sulfur oxides at a relatively high temperature compared to the low temperature control command and initializes the information on the engine operation time 110 evaluated in the second time processing unit 216 and the information on the vehicle trip distance 130 evaluated in the second distance processing unit 236.

In order to solve the technical problem, another exemplary embodiment of the present disclosure provides an apparatus for post-processing exhaust gas for removing sulfur oxides, the apparatus including: a first time processing unit 212 configured to receive information on an engine operation time 110 about a degree of time for which an engine is operated, be set with a short time reference value 214 and a long time reference value 218, set with sulfur oxides quantity reference value 256 and first and second sulfur oxides quantity reference values 266a and 266b, evaluate the information on the engine operation time 110, determine whether the evaluated value reaches the short time reference value 214, and generate a low temperature control command when the evaluated value reaches the short time reference value 214; a second time processing unit 216 configured to evaluate the information on the engine operation time 110, determine whether the evaluated value reaches the long time reference value 218, and generate a high temperature control command when the evaluated value reaches the long time reference value 218; a DOC sulfur oxides storage quantity calculating unit 252 configured to receive information on sulfur oxides produced quantity 140 about a degree of quantity of sulfur oxides produced, receive a DOC inlet exhaust gas temperature 142, and calculate a storage quantity of sulfur oxides produced in a DOC; sulfur oxides quantity processing unit 258 configured to evaluate the storage quantity of sulfur oxides, determine whether the evaluated storage quantity of sulfur oxides reaches the sulfur oxides quantity reference value 256, and generate a low temperature control command when the storage quantity of sulfur oxides reaches the sulfur oxides quantity reference value 256; a first sulfur oxides storage quantity processing unit 266a configured to receive the information on the sulfur oxides produced quantity 140, receive the storage quantity of sulfur oxides, receive an SCR inlet exhaust gas temperature 144, and calculate a storage quantity of a first sulfur oxides produced in an SCR; a first sulfur oxides quantity processing unit 268a configured to evaluate the storage quantity of the first sulfur oxides, determine whether the evaluated storage quantity of the first sulfur oxides reaches the first sulfur oxides quantity reference value 266a, and generate a low temperature control command when the evaluated storage quantity of the first sulfur oxides reaches the first sulfur oxides quantity reference value 266a; a second sulfur oxides storage quantity processing unit 266b configured to receive information on the sulfur oxides produced quantity 140, receive the storage quantity of sulfur oxides, receive the SCR inlet exhaust gas temperature 144, and calculate a storage quantity of a second sulfur oxides produced in the SCR; and a second sulfur oxides quantity processing unit 268b configured to evaluate the storage quantity of the second sulfur oxides, determine whether the evaluated storage quantity of the second sulfur oxides reaches the second sulfur oxides quantity reference value 266b, and generate a high temperature control command when the evaluated storage quantity of the second sulfur oxides reaches the second sulfur oxides quantity reference value 266b,in which when the low temperature control command is generated, the apparatus performs an operation of removing the sulfur oxides at a relatively low temperature compared to the high temperature control command and initializes the information on the engine operation time 110 evaluated in the first time processing unit 212, and the information on the sulfur oxides produced quantity 140 evaluated in each of the sulfur oxides quantity processing unit 258 and the first sulfur oxides quantity processing unit 268a, and, when the high temperature control command is generated, the apparatus performs an operation of removing the sulfur oxides at a relatively high temperature compared to the low temperature control command and initializes the information on the engine operation time 110 evaluated in the second time processing unit 216, and the information on the sulfur oxides produced quantity 140 evaluated in the second sulfur oxides quantity processing unit 268b.

In order to solve the technical problem, another exemplary embodiment of the present disclosure provides an apparatus for post-processing exhaust gas for removing sulfur oxides, the apparatus including: a first time processing unit 212 configured to receive information on an engine operation time 110 about a degree of time, for which an engine is operated, be set with a short time reference value 214 and a long time reference value 218, receive information on an engine fuel consumption quantity 120 about a degree of fuel consumed by the engine, be set with a small quantity reference value 224 and a large quantity reference value 228, receive information on a vehicle trip distance 130 about a degree of a trip distance of a vehicle, be set with a short distance reference value 234 and a long distance reference value 238, evaluate the information on the engine operation time 110, determine whether the evaluated value reaches the short time reference value 214, and generate a low temperature control command when the evaluated value reaches the short time reference value 214; a second time processing unit 216 configured to evaluate the information on the engine operation time 110, determine whether the evaluated value reaches the long time reference value 218, and generate a high temperature control command when the evaluated value reaches the long time reference value 218; a first fuel quantity processing unit 222 configured to evaluate the information on the engine fuel consumption quantity 120, determine whether the evaluated value reaches the small quantity reference value 224, and generate a low temperature control command when the evaluated value reaches the small quantity reference value 224; a second fuel quantity processing unit 226 configured to evaluate the information on the engine fuel consumption quantity 120, determine whether the evaluated value reaches the large quantity reference value 228, and generate a high temperature control command when the evaluated value reaches the large quantity reference value 228; a first distance processing unit 232 configured to evaluate the information on the vehicle trip distance 130, determine whether the evaluated value reaches the short distance reference value 234, and generate the low temperature control command when the evaluated value reaches the short distance reference value 234; and a second distance processing unit 236 configured to evaluate the information on the vehicle trip distance 130, determine whether the evaluated value reaches the long distance reference value 238, and generate the high temperature control command when the evaluated value reaches the long distance reference value 238, in which when the low temperature control command is generated, the apparatus performs an operation of removing the sulfur oxides at a relatively low temperature compared to the high temperature control command and initializes the information on the engine operation time 110 evaluated in the first time processing unit 212, the information on the engine fuel consumption quantity 120 evaluated in the first fuel quantity processing unit 222, and the information on the vehicle trip distance 130 evaluated in the first distance processing unit 232, and when the high temperature control command is generated, the apparatus performs an operation of removing the sulfur oxides at a relatively high temperature compared to the low temperature control command and initializes the information on the engine operation time 110 evaluated in the second time processing unit 216, the information on the engine fuel consumption quantity 120 evaluated in the second fuel quantity processing unit 226, and the information on the vehicle trip distance 130 evaluated in the second distance processing unit 236.

In order to solve the technical problem, another exemplary embodiment of the present disclosure provides an apparatus for post-processing exhaust gas for removing sulfur oxides, the apparatus including: a first time processing unit 212 configured to receive information on an engine operation time 110 about a degree of time, for which an engine is operated, be set with a short time reference value 214 and a long time reference value 218, receive information on an engine fuel consumption quantity 120 about a degree of fuel consumed by the engine, be set with a small quantity reference value 224 and a large quantity reference value 228, be set with sulfur oxides quantity reference value 256 and first and second sulfur oxides quantity reference values 266a and 266b, evaluate the information on the engine operation time 110, determine whether the evaluated value reaches the short time reference value 214, and generate a low temperature control command when the evaluated value reaches the short time reference value 214; a second time processing unit 216 configured to evaluate the information on the engine operation time 110, determine whether the evaluated value reaches the long time reference value 218, and generate a high temperature control command when the evaluated value reaches the long time reference value 218; a first fuel quantity processing unit 222 configured to evaluate the information on the engine fuel consumption quantity 120, determine whether the evaluated value reaches the small quantity reference value 224, and generate the low temperature control command when the evaluated value reaches the small quantity reference value 224; a second fuel quantity processing unit 222 configured to evaluate the information on the engine fuel consumption quantity 120, determine whether the evaluated value reaches the large quantity reference value 228, and generate the high temperature control command when the evaluated value reaches the large quantity reference value 228; a DOC sulfur oxides storage quantity calculating unit 252 configured to receive information on sulfur oxides produced quantity 140 about a degree of quantity of sulfur oxides produced, receive a DOC inlet exhaust gas temperature 142, and calculate a storage quantity of sulfur oxides produced in a DOC; sulfur oxides quantity processing unit 258 configured to evaluate the storage quantity of sulfur oxides, determine whether the evaluated storage quantity of sulfur oxides reaches the sulfur oxides quantity reference value 256, and generate the low temperature control command when the storage quantity of sulfur oxides reaches the sulfur oxides quantity reference value 256; a first sulfur oxides storage quantity processing unit 266a configured to receive the information on the sulfur oxides produced quantity 140, receive the storage quantity of sulfur oxides, receive an SCR inlet exhaust gas temperature 144, and calculate a storage quantity of a first sulfur oxides produced in an SCR; a first sulfur oxides quantity processing unit 268a configured to evaluate the storage quantity of the first sulfur oxides, determine whether the evaluated storage quantity of the first sulfur oxides reaches the first sulfur oxides quantity reference value 266a, and generate the low temperature control command when the evaluated storage quantity of the first sulfur oxides reaches the first sulfur oxides quantity reference value 266a; a second sulfur oxides storage quantity processing unit 266b configured to receive the information on the sulfur oxides produced quantity 140, receive the storage quantity of sulfur oxides, receive the SCR inlet exhaust gas temperature 144, and calculate a storage quantity of a second sulfur oxides produced in the SCR; and a second sulfur oxides quantity processing unit 268b configured to evaluate the storage quantity of the second sulfur oxides, determine whether the evaluated storage quantity of the second sulfur oxides reaches the second sulfur oxides quantity reference value 266b, and generate the high temperature control command when the evaluated storage quantity of the second sulfur oxides reaches the second sulfur oxides quantity reference value 266b, in which when the low temperature control command is generated, the apparatus performs an operation of removing the sulfur oxides at a relatively low temperature compared to the high temperature control command, and initializes the information on the engine operation time 110 evaluated in the first time processing unit 212 and the information on the engine fuel consumption quantity 120 evaluated in the first fuel quantity processing unit 222 and initializes the information on the sulfur oxides produced quantity 140 evaluated in each of the sulfur oxides quantity processing unit 258 and the first sulfur oxides quantity processing unit 268a, and when the high temperature control command is generated, the apparatus performs an operation of removing the sulfur oxides at a relatively high temperature compared to the low temperature control command, and initializes the information on the engine operation time 110 evaluated in the second time processing unit 216 and the information on the engine fuel consumption quantity 120 evaluated in the second fuel quantity processing unit 226 and initializes the information on the sulfur oxides produced quantity 140 evaluated in the second sulfur oxides quantity processing unit 268b.

In order to solve the technical problem, another exemplary embodiment of the present disclosure provides an apparatus for post-processing exhaust gas for removing sulfur oxides, the apparatus including: a first time processing unit 212 configured to receive information on an engine operation time 110 about a degree of time, for which an engine is operated, be set with a short time reference value 214 and a long time reference value 218, receive information on a vehicle trip distance 130 about a degree of a trip distance of a vehicle, be set with a short distance reference value 234 and a long distance reference value 238, be set with sulfur oxides quantity reference value 256 and first and second sulfur oxides quantity reference values 266a and 266b, evaluate the information on the engine operation time 110, determine whether the evaluated value reaches the short time reference value 214, and generate a low temperature control command when the evaluated value reaches the short time reference value 214; a second time processing unit 216 configured to evaluate the information on the engine operation time 110, determine whether the evaluated value reaches the long time reference value 218, and generate a high temperature control command when the evaluated value reaches the long time reference value 218; a first distance processing unit 232 configured to evaluate the information on the vehicle trip distance 130, determine whether the evaluated value reaches the short distance reference value 234, and generate the low temperature control command when the evaluated value reaches the short distance reference value 234; a second distance processing unit 236 configured to evaluate the information on the vehicle trip distance 130, determine whether the evaluated value reaches the long distance reference value 238, and generate the high temperature control command when the evaluated value reaches the long distance reference value 238; a DOC sulfur oxides storage quantity calculating unit 252 configured to receive information on sulfur oxides produced quantity 140 about a degree of quantity of sulfur oxides produced, receive a DOC inlet exhaust gas temperature 142, and calculate a storage quantity of sulfur oxides produced in a DOC; sulfur oxides quantity processing unit 258 configured to evaluate the storage quantity of sulfur oxides, determine whether the evaluated storage quantity of sulfur oxides reaches the sulfur oxides quantity reference value 256, and generate the low temperature control command when the storage quantity of sulfur oxides reaches the sulfur oxides quantity reference value 256; a first sulfur oxides storage quantity processing unit 266a configured to receive the information on the sulfur oxides produced quantity 140, receive the storage quantity of sulfur oxides, receive an SCR inlet exhaust gas temperature 144, and calculate a storage quantity of a first sulfur oxides produced in an SCR; a first sulfur oxides quantity processing unit 268a configured to evaluate the storage quantity of the first sulfur oxides, determine whether the evaluated storage quantity of the first sulfur oxides reaches the first sulfur oxides quantity reference value 266a, and generate the low temperature control command when the evaluated storage quantity of the first sulfur oxides reaches the first sulfur oxides quantity reference value 266a; a second sulfur oxides storage quantity processing unit 266b configured to receive the information on the sulfur oxides produced quantity 140, receive the storage quantity of sulfur oxides, receive the SCR inlet exhaust gas temperature 144, and calculate a storage quantity of a second sulfur oxides produced in the SCR; and a second sulfur oxides quantity processing unit 268b configured to evaluate the storage quantity of the second sulfur oxides, determine whether the evaluated storage quantity of the second sulfur oxides reaches the second sulfur oxides quantity reference value 266b, and generate the high temperature control command when the evaluated storage quantity of the second sulfur oxides reaches the second sulfur oxides quantity reference value 266b, in which when the low temperature control command is generated, the apparatus performs an operation of removing the sulfur oxides at a relatively low temperature compared to the high temperature control command, and initializes the information on the engine operation time 110 evaluated in the first time processing unit 212 and the information on the vehicle trip distance 130 evaluated in the first distance processing unit 232 and initializes the information on the sulfur oxides produced quantity 140 evaluated in each of the sulfur oxides quantity processing unit 258 and the first sulfur oxides quantity processing unit 268a, and when the high temperature control command is generated, the apparatus performs an operation of removing the sulfur oxides at a relatively high temperature compared to the low temperature control command, and initializes the information on the engine operation time 110 evaluated in the second time processing unit 216 and the information on the vehicle trip distance 130 evaluated in the second distance processing unit 236 and initializes the information on the sulfur oxides produced quantity 140 evaluated in the second sulfur oxides quantity processing unit 268b.

In order to solve the technical problem, another exemplary embodiment of the present disclosure provides an apparatus for post-processing exhaust gas for removing sulfur oxides, the apparatus including: a first time processing unit 212 configured to receive information on an engine operation time 110 about a degree of time, for which an engine is operated, be set with a short time reference value 214 and a long time reference value 218, receive information on an engine fuel consumption quantity 120 about a degree of fuel consumed by the engine, be set with a small quantity reference value 224 and a large quantity reference value 228, receive information on a vehicle trip distance 130 about a degree of a trip distance of the vehicle, be set with a short distance reference value 234 and a long distance reference value 238, be set with sulfur oxides quantity reference value 256 and first and second sulfur oxides quantity reference values 266a and 266b, evaluate the information on the engine operation time 110, determine whether the evaluated value reaches the short time reference value 214, and generate a low temperature control command when the evaluated value reaches the short time reference value 214; a second time processing unit 216 configured to evaluate the information on the engine operation time 110, determine whether the evaluated value reaches the long time reference value 218, and generate a high temperature control command when the evaluated value reaches the long time reference value 218; a first fuel quantity processing unit 222 configured to evaluate the information on the engine fuel consumption quantity 120, determine whether the evaluated value reaches the small quantity reference value 224, and generate the low temperature control command when the evaluated value reaches the small quantity reference value 224; a second fuel quantity processing unit 226 configured to evaluate the information on the engine fuel consumption quantity 120, determine whether the evaluated value reaches the large quantity reference value 224, and generate the high temperature control command when the evaluated value reaches the large quantity reference value 228; a first distance processing unit 236 configured to evaluate the information on the vehicle trip distance 130, determine whether the evaluated value reaches the short distance reference value 234, and generate the low temperature control command when the evaluated value reaches the short distance reference value 234; a second distance processing unit 236 configured to evaluate the information on the vehicle trip distance 130, determine whether the evaluated value reaches the long distance reference value 238, and generate the high temperature control command when the evaluated value reaches the long distance reference value 238; a DOC sulfur oxides storage quantity calculating unit 252 configured to receive information on sulfur oxides produced quantity 140 about a degree of quantity of sulfur oxides produced, receive a DOC inlet exhaust gas temperature 142, and calculate a storage quantity of sulfur oxides produced in a DOC; sulfur oxides quantity processing unit 258 configured to evaluate the storage quantity of sulfur oxides, determine whether the evaluated storage quantity of sulfur oxides reaches the sulfur oxides quantity reference value 256, and generate the low temperature control command when the storage quantity of sulfur oxides reaches the sulfur oxides quantity reference value 256; a first sulfur oxides storage quantity processing unit 266a configured to receive the information on the sulfur oxides produced quantity 140, receive the storage quantity of sulfur oxides, receive an SCR inlet exhaust gas temperature 144, and calculate a storage quantity of a first sulfur oxides produced in an SCR; a first sulfur oxides quantity processing unit 268a configured to evaluate the storage quantity of the first sulfur oxides, determine whether the evaluated storage quantity of the first sulfur oxides reaches the first sulfur oxides quantity reference value 266a, and generate the low temperature control command when the evaluated storage quantity of the first sulfur oxides reaches the first sulfur oxides quantity reference value 266a; a second sulfur oxides storage quantity processing unit 266b configured to receive information on the sulfur oxides produced quantity 140, receive the storage quantity of sulfur oxides, receive the SCR inlet exhaust gas temperature 144, and calculate a storage quantity of a second sulfur oxides produced in the SCR; and a second sulfur oxides quantity processing unit 268b configured to evaluate the storage quantity of the second sulfur oxides, determine whether the evaluated storage quantity of the second sulfur oxides reaches the second sulfur oxides quantity reference value 266b, and generate the high temperature control command when the evaluated storage quantity of the second sulfur oxides reaches the second sulfur oxides quantity reference value 266b, in which when the low temperature control command is generated, the apparatus performs an operation of removing the sulfur oxides at a relatively low temperature compared to the high temperature control command, and initializes the information on the engine operation time 110 evaluated in the first time processing unit 212, the information on the engine fuel consumption quantity 120 evaluated in the first fuel quantity processing unit 222, and the information on the vehicle trip distance 130 evaluated in the first distance processing unit 232 and initializes the information on the sulfur oxides produced quantity 140 evaluated in each of the sulfur oxides quantity processing unit 258 and the first sulfur oxides quantity processing unit 268a, and when the high temperature control command is generated, the apparatus performs an operation of removing the sulfur oxides at a relatively high temperature compared to the low temperature control command, and initializes the information on the engine operation time 110 evaluated in the second time processing unit 216, the information on the engine fuel consumption quantity 120 evaluated in the second fuel quantity processing unit 226, and the information on the vehicle trip distance 130 evaluated in the second distance processing unit 236 and initializes the information on the sulfur oxides produced quantity 140 evaluated in the second sulfur oxides quantity processing unit 268b.

In order to solve the technical problem, another exemplary embodiment of the present disclosure provides an apparatus for post-processing exhaust gas for removing sulfur oxides, the apparatus including: a first fuel quantity processing unit 222 configured to information on an engine fuel consumption quantity 120 about an amount of fuel consumed by the engine, be set with a small quantity reference value 224 and a large quantity reference value 228, receive information on a vehicle trip distance 130 about a degree of a trip distance of a vehicle, be set with a short distance reference value 234 and a long distance reference value 238, evaluate the information on the engine fuel consumption quantity 120, determine whether the evaluated value reaches the small quantity reference value 224, and generate a low temperature control command when the evaluated value reaches the small quantity reference value 224; a second fuel quantity processing unit 226 configured to evaluate the information on the engine fuel consumption 120, determine whether the evaluated value reaches the large quantity reference value 228, and generate a high temperature control command when the evaluated value reaches the large quantity reference value 228; a first distance processing unit 232 configured to evaluate the information on the vehicle trip distance 130, determine whether the evaluated value reaches the short distance reference value 234, and generate the low temperature control command when the evaluated value reaches the short distance reference value 234; and a second distance processing unit 236 configured to evaluate the information on the vehicle trip distance 130, determine whether the evaluated value reaches the long distance reference value 238, and generate the high temperature control command when the evaluated value reaches the long distance reference value 238, in which when the low temperature control command is generated, the apparatus performs an operation of removing the sulfur oxides at a relatively low temperature compared to the high temperature control command, and initializes the information on the engine fuel consumption quantity 120 evaluated in the first fuel quantity processing unit 222 and the information on the vehicle trip distance 130 evaluated in the first distance processing unit 232, and when the high temperature control command is generated, the apparatus performs an operation of removing the sulfur oxides at a relatively high temperature compared to the low temperature control command, and initializes the information on the engine fuel consumption quantity 120 evaluated in the second fuel quantity processing unit 226 and the information on the vehicle trip distance 130 evaluated in the second distance processing unit 236.

When the second time processing unit 216 is initialized, the first time processing unit 212 may be initialized together.

The long time reference value 218 may be set to 1.5 times to 20 times the short time reference value 214.

When the second fuel quantity processing unit 226 is initialized, the first fuel quantity processing unit 222 may be initialized together.

The large quantity reference value 228 may be set to 1.5 times to 10 times the small quantity reference value 224.

When the second distance processing unit 236 is initialized, the first distance processing unit 232 may be initialized together.

The long distance reference value 238 may be set to 1.5 times to 5 times the short distance reference value 234.

When the second sulfur oxides quantity processing unit 268b is initialized, the sulfur oxides quantity processing unit 258 and the first sulfur oxides quantity processing unit 268a may be initialized together.

A temperature implemented when the operation of removing the sulfur oxides is performed by the low temperature control command may be 400°C to 550°C, and a temperature implemented when the operation of removing the sulfur oxides is performed by the high temperature control command may be 600°C to 750°C.

The apparatus may set an effective temperature when an actually implemented temperature is higher than a predetermined temperature after the low temperature control command or the high temperature control command is generated, and may further include sulfur oxides removal evaluating unit 410 configured to evaluate a time during the implementation of the effective temperature, and determine that the operation of removing the sulfur oxides is successful when the evaluated time is longer than a predetermined effective time.

The effective time may be 5 minutes to 30 minutes.

The method may further include a monitoring unit 420 configured to stop the operation of removing the sulfur oxides when the operation of removing the sulfur oxides is not properly performed after the low temperature control command or the high temperature control command is generated, and display a message through which a user may visually or audibly recognize a failure of the operation of removing the sulfur oxides.

The method may further include a manual control unit 270 configured to make the user manually initiate the operation of removing the sulfur oxides when the operation of removing the sulfur oxides is failed.

Other detailed matters of the exemplary embodiments are included in the detailed description and the drawings.

The sulfur oxides caused from the fuel and the engine oil is adsorbed to a catalyst in the form of sulfur oxides to degrade performance, and has a characteristic in that an adsorption rate of the sulfur oxides to the catalyst is different according to the kind of catalyst and the form of sulfur oxides. Accordingly, the apparatus and the method of post-processing exhaust gas for removing the sulfur oxides according to the exemplary embodiment of the present invention may separate and control a regeneration cycle and a regeneration temperature of the apparatus for post-processing exhaust gas even though the sulfur oxides has a different characteristic according to the form of sulfur oxides, thereby removing most of the sulfur oxides.

### BRIEF DESCRIPTION OF THE DRAWINGS

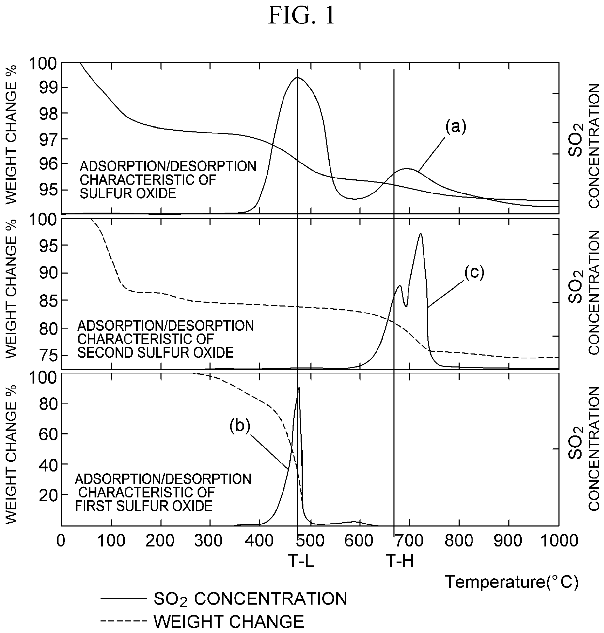

FIG. 1 is a graph for describing an adsorption and desorption characteristic of sulfur oxides according to a catalyst.

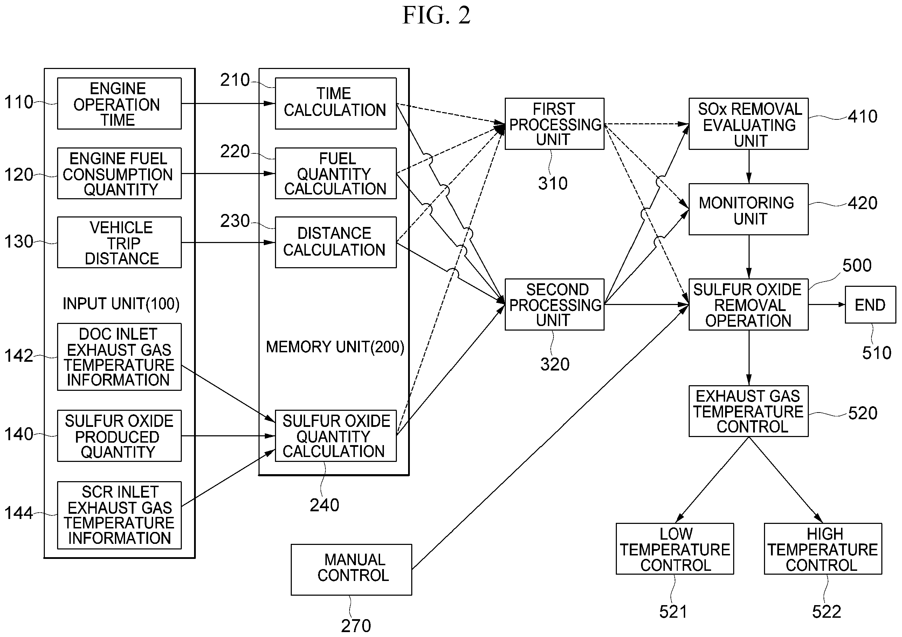

FIG. 2 is a diagram for describing an apparatus for post-processing exhaust gas for removing sulfur oxides according to an exemplary embodiment of the present disclosure.

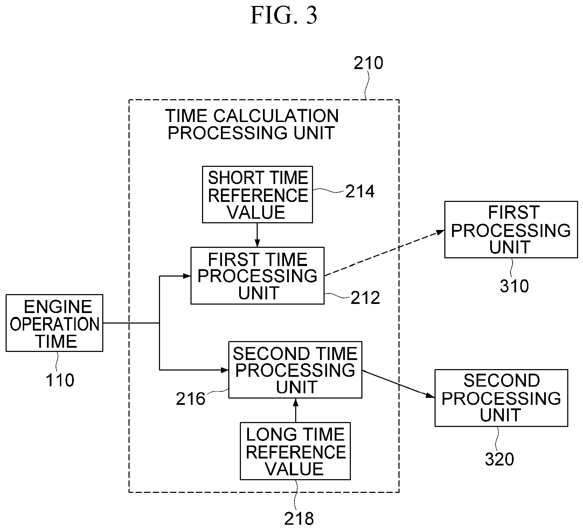

FIG. 3 is a diagram for describing an example, in which a regeneration cycle and a regeneration temperature of a catalytic device are set based on information on an engine operation time in the apparatus for post-processing exhaust gas for removing the sulfur oxides according to the exemplary embodiment of the present disclosure.

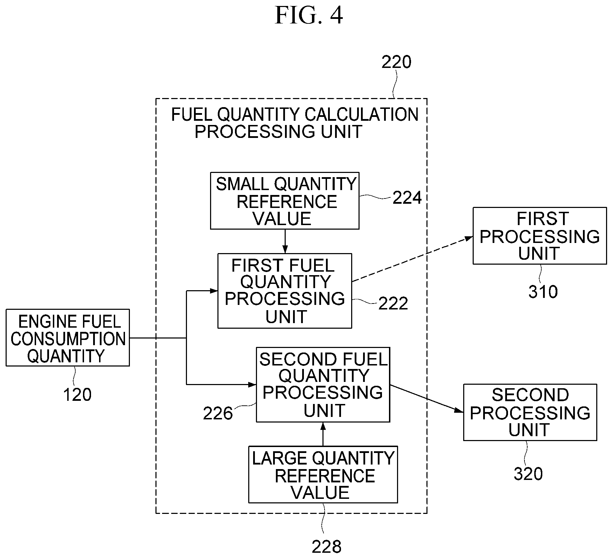

FIG. 4 is a diagram for describing an example, in which a regeneration cycle and a regeneration temperature of a catalytic device are set based on information on an engine fuel consumption quantity in the apparatus for post-processing exhaust gas for removing the sulfur oxides according to the exemplary embodiment of the present disclosure.

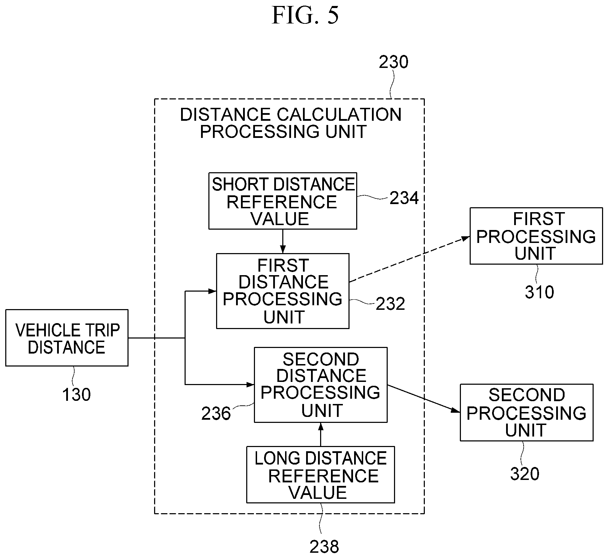

FIG. 5 is a diagram for describing an example, in which a regeneration cycle and a regeneration temperature of a catalytic device are set based on information on a vehicle trip distance in the apparatus for post-processing exhaust gas for removing the sulfur oxides according to the exemplary embodiment of the present disclosure.

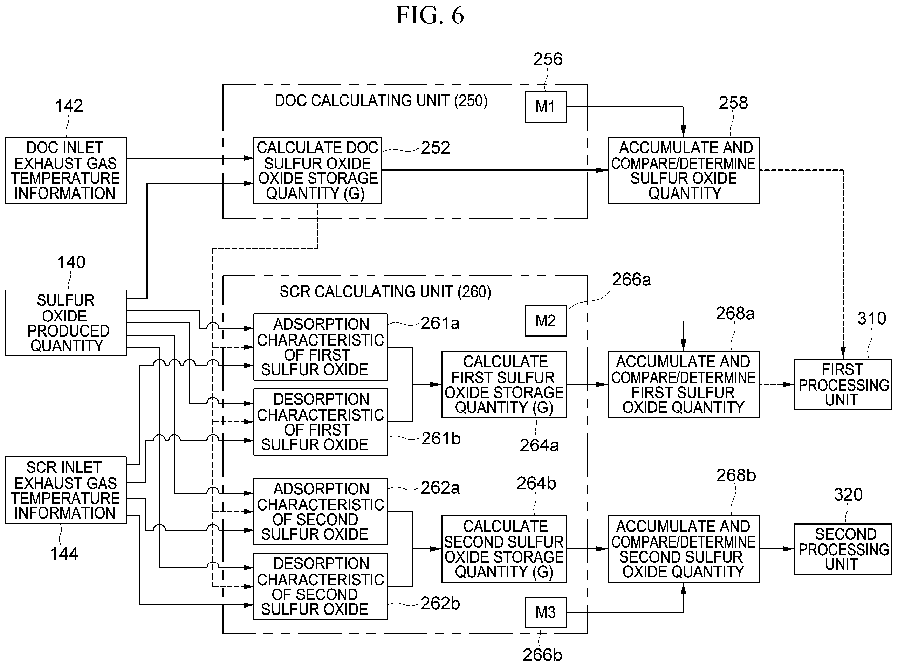

FIG. 6 is a diagram for describing an example, in which a regeneration cycle and a regeneration temperature of a catalytic device are set based on information on sulfur oxides produced quantity in the apparatus for post-processing exhaust gas for removing the sulfur oxides according to the exemplary embodiment of the present disclosure.

**Description of Main Reference Numerals of the Drawings**

| | |
|---|---|
| 100: Input unit | |
| 110: Engine operating time | 120: Engine fuel consumption quantity |
| 130: Vehicle trip distance | 140: Sulfur oxide produced quantity |
| 142: DOC inlet exhaust gas temperature information | |
| 144: SCR inlet exhaust gas temperature information | |
| 200: Memory unit | 210: Time calculation processing unit |
| 212: First time processing unit | 214: Short time reference value |
| 216: Second time processing unit | 218: Long time reference value |
| 220: Fuel quantity calculation processing unit | |
| 222: First fuel quantity processing unit | 224: Small quantity reference value |
| 226: Second fuel quantity processing unit | |
| 228: Large quantity reference value | |
| 230: Distance calculation processing unit | |
| 232: First distance processing unit | 234: Short distance reference value |
| 236: Second distance processing unit | 238: Long distance reference value |
| 240: Sulfur oxide quantity calculation processing unit | |
| 250: DOC calculation processing unit | |
| 252: DOC sulfur oxides storage quantity calculating unit | |
| 256: Sulfur oxide quantity reference value | |
| 258: Sulfur oxide quantity processing unit | |
| 260: SCR calculation processing unit | |
| 261a, 262a: First, second sulfur oxides adsorption characteristic | |
| 261b, 262b: First, second sulfur oxides desorption characteristic | |
| 264a, 264b: First, second sulfur oxides storage quantity processing unit | |
| 266a, 266b: First, second sulfur oxides storage quantity reference value | |
| 268a, 268b: First, second sulfur oxides quantity processing unit | |
| 270: Manual control unit | |
| 310, 320: First, second processing unit | |
| 410: Sulfur oxide removal evaluating unit | |
| 420: Monitoring unit | |
| 500: Sulfur oxide removal operating unit | |
| 510: End | |
| 520: Exhaust gas temperature control unit | |
| 521: Low temperature control unit | |
| 522: High temperature control unit | |

### DETAILED DESCRIPTION

Advantages and characteristics of the present disclosure, and a method of achieving the advantages and characteristics will be clear with reference to an exemplary embodiment to be described in detail together with the accompanying drawings.

Hereinafter, an exemplary embodiment of the present disclosure will be described in detail with reference to the accompanying drawings. It should be appreciated that the exemplary embodiment, which will be described below, is illustratively described for helping to understand the present disclosure, and the present disclosure may be variously modified to be carried out differently from the exemplary embodiment described herein. In the following description of the present disclosure, a detailed description and a detailed illustration of publicly known functions or constituent elements incorporated herein will be omitted when it is determined that the detailed description may unnecessarily make the subject matter of the present disclosure unclear.

Further, the terms used in the description are defined considering the functions of the present disclosure and may vary depending on the intention or usual practice of a manufacturer. Therefore, the definitions should be made based on the entire contents of the present specification.

In the meantime, a numerical value suggested throughout the specification is a value suggested for helping to understand the invention, and the numerical value does not influence the scope of the present disclosure.

Like reference numerals indicate like elements throughout the specification.

Hereinafter, an adsorption/desorption characteristic of sulfur oxides according to sulfur oxides when an apparatus for post-processing exhaust gas performs a regeneration operation for removing sulfur oxides will be described with reference to FIG. 1. FIG. 1 is a graph for describing an adsorption and desorption characteristic of sulfur oxides according to a catalyst.

As illustrated in FIG. 1, graph (a) of FIG. 1 is a graph representing a general situation of an adsorption/desorption characteristic of sulfur oxides. A horizontal axis means a temperature, and a left vertical axis represents a weight change (%) and a right vertical axis represents a concentration of sulfur oxides.

That is, in reviewing graph (a) of FIG. 1, it can be seen that when a temperature is increased, a weight change rate is gradually decreased. This means that when a temperature is increased, sulfur oxides, which is in an adsorbed state, is desorbed in the apparatus for post-processing exhaust gas.

In the meantime, the sulfur oxides represents a high concentration at a specific temperature. For example, the sulfur oxides represents a high concentration in a first temperature section and a second temperature section. Here, the first temperature section is about 400°C to 550°C, and the second temperature section is about 600°C to 750°C. This means that the sulfur oxides is more actively desorbed in a specific temperature section.

Graphs (b) and (c) of FIG. 1 are graphs for recognizing whether a specific compound is removed in sulfur oxides.

First, in reviewing graph (b) of FIG. 1, graph (b) represents an adsorption/desorption characteristic of a first sulfur oxides, and it can be seen that a sulfur concentration is actively changed with a large quantity approximately in the first temperature section. That is, it may be understood that the large quantity of the first sulfur oxides is desorbed in the first temperature section. Here, the first sulfur oxides is sulfur oxides of ammonium sulfate (NH₄)₂SO₄).

In the meantime, in reviewing graph (c) of FIG. 1, graph (c) represents an adsorption/desorption characteristic of a second sulfur oxides, and it can be seen that a sulfur concentration is actively changed with a large quantity approximately in the second temperature section. That is, it may be understood that the large quantity of the second sulfur oxides is desorbed in the second temperature section. However, it can be seen that the quantity of sulfur oxides adsorbed and desorbed is relatively small compared to the first sulfur oxides. Here, the second sulfur oxides is sulfur oxides of copper sulfate (CuSO₄).

That is, when a catalytic device is uniformly regenerated in accordance with one specific kind of temperature environment like the related art, some sulfur oxides may be removed, but the other sulfur oxides may not be removed. Further, when the catalytic device is regenerated in accordance with a high temperature, most of the sulfur oxides may be removed, but in order to create a high temperature environment, there is a problem in that the large quantity of fuel is consumed.

In this respect, the present disclosure may remove sulfur oxides by differently setting a cycle, in which the regeneration of the apparatus for post-processing exhaust gas is performed, and a temperature implemented when the reproduction is performed according to a component of the sulfur oxides. This will be described with reference to FIG. 2.

FIG. 2 is a diagram for describing the apparatus for post-processing exhaust gas for removing sulfur oxides according to an exemplary embodiment of the present disclosure.

Information on an engine operation time 110, an engine fuel consumption quantity 120, a vehicle trip distance 130, and sulfur oxides produced quantity 140 may be collected, and the collected information may be stored in an input unit 100. A reproduction cycle and a temperature environment of a catalytic device are set for each information. Here, the reproduction cycle and the temperature environment of the catalytic device may also be controlled by collecting information on any one or information on two or more of the engine operation time 110, the engine fuel consumption quantity 120, the vehicle trip distance 130, and the sulfur oxides produced quantity 140.

For example, a time calculation, a fuel quantity calculation, a distance calculation, and sulfur oxides quantity calculation are performed for information on the engine operation time 110, the engine fuel consumption quantity 120, the vehicle trip distance 130, and the sulfur oxides produced quantity 140, respectively, and a first processing unit 310 or a second processing unit 320 sets the regeneration cycle and the regeneration temperature according to a result of each calculation.

The first processing unit 310 allows the regeneration to be performed at a relatively low temperature (T-L) compared to the second processing unit 320, and sets a short regeneration cycle (short term DeSOx).

The second processing unit 320 allows the regeneration to be performed at a relatively high temperature (T-H) compared to the first processing unit 310, and sets a long regeneration cycle (long term DeSOx).

Regeneration environment information (regeneration cycle and regeneration temperature) set by the first and second processing units 310 and 320 is provided to sulfur oxides removal evaluating unit 410.

The sulfur oxides removal evaluating unit 410 will be described. In the apparatus for post-processing exhaust gas for removing the sulfur oxides according to the exemplary embodiment of the present disclosure, the low temperature (T-L) and the high temperature (T-H) are set, but construction machinery (vehicle) substantially has a large load variation width, so that it may be substantially impossible to uniformly maintain the temperature control, and thus a slight oscillation is inevitably generated. When the variation width is large, so that a regeneration temperature is implemented to be lower than the set temperature, the operation of removing sulfur oxides (DeSOx) may not be properly performed. Accordingly, each of the low temperature and the high temperature may have a minimum effective temperature reference. The sulfur oxides removal evaluating unit 410 evaluates time only when a currently controlled temperature of exhaust gas (a temperature of an SCR inlet) is higher than the minimum effective temperature, and when the evaluated time is larger than a predetermined effective time, for which the operation of removing the sulfur oxides (DeSOx) is performed, the sulfur oxides removal evaluating unit 410 determines that the operation of removing the sulfur oxides (DeSOx) is successful and terminates to increase the temperature of the exhaust gas. The effective time, for which the operation of removing the sulfur oxides (DeSOx) is performed, may be set to 5 minutes to 30 minutes.

Actually, only when the effective time taken for the operation of removing the sulfur oxides is longer than 5 minutes, it is determined that the sulfur oxides is stably removed. The effective time less than 5 minutes may be understood as a time insufficient to remove the sulfur oxides. In the meantime, the effective time may be set within 30 minutes. The reason is that when the effective time is excessively long, fuel is additionally and continuously injected even though the sulfur oxides is sufficiently removed, thereby causing waste of the fuel.

Then, after the sulfur oxides removal evaluating unit 410 is operated, the monitoring unit 420 is operated.

The monitoring unit 420 prevents the sulfur oxides from being permanently removed, and allows the operation of removing the sulfur oxides to be performed only when a specific condition is satisfied. The specific condition means that any one element of information or a plurality of elements of information among the four kinds of information including the monitored information on the engine operation time 110, the engine fuel consumption quantity 120, the vehicle trip distance 130, and the sulfur oxides produced quantity 140 reaches a predetermined value.

The monitoring unit 420 sets a comparison target value (refer to each reference value) for each of the four elements of information, and stops the operation of removing the sulfur oxides and notifies a driver of a failure of the operation of removing the sulfur oxides when the sulfur oxides is not properly performed even though the specific information exceeds a corresponding comparison target value. For example, the monitoring unit 420 displays a visually or audibly recognizable message. That is, the monitoring unit 420 may generate an alarm or output a message capable of notifying the failure on a dashboard.

Further, as described above, when the operation of removing the sulfur oxides is failed, the apparatus may induce a user to manually perform the operation of removing the sulfur oxides according to an intention of the user. That is, the apparatus induces the user to operate a manual switch disposed in a manual control unit 270 for manually performing the regeneration of the catalytic device. The manual control unit 270 is a switch capable of manually initiating the operation of removing the sulfur oxides according to an intention of a worker.

In the meantime, there may be a case where any one condition among the four kinds of elements of information is satisfied, and during the performance of the regeneration of the catalytic device under any one temperature environment between the low temperature (T-L) and the high temperature (T-H), another condition is additionally satisfied. In this case, even though the later condition is satisfied, the regeneration of the catalytic device is already being performed, so that it is possible to restrict the regeneration of the catalytic device from being continuously and newly performed.

The restriction of the regeneration of the catalytic device from being continuously performed will be additionally described. Under any one temperature environment between the low temperature (T-L) and the high temperature (T-H), after the regeneration operation of the catalytic device is finished, the apparatus may have a pause time. The pause time is a time from the precedent regeneration operation of the catalytic device to a next regeneration operation of the catalytic device. That is, the apparatus for post-processing exhaust gas for removing the sulfur oxides according to the exemplary embodiment of the present disclosure may newly start the regeneration operation of the catalytic device after the pause time elapses. However, when the excessively high concentration of sulfur oxides is detected by an unknown reason, the apparatus may also exceptionally perform the regeneration of the catalytic device.

In the meantime, the regeneration environment information (the regeneration cycle and the regeneration temperature) set by the first and second processing units 310 and 320 may pass through the sulfur oxides removal evaluating unit 410 or may be directly provided to sulfur oxides removal operating unit 500.

The sulfur oxides removal operating unit 500 gives a command to regenerate the catalytic device for substantially removing the sulfur oxides by the set regeneration environment information. When it is not necessary to perform the operation of removing the sulfur oxides, the operation of removing the sulfur oxides is terminated (510).

The regeneration environment information is set by the short regeneration cycle (short term DeSOx) and the long regeneration cycle (long term DeSOx), so that a time, at which the catalytic device is to be regenerated, is set, and when a time reaches the short regeneration cycle, the regeneration of the catalytic device is performed under the low temperature environment. Similarly, when a time reaches the long regeneration cycle, the regeneration of the catalytic device is performed under the high temperature environment.

An exhaust gas temperature control unit 520 performs the command given from the sulfur oxides removal operating unit 500, and when the regeneration environment information contains the command containing the low temperature information (T-L), a low temperature control unit 521 performs a low temperature control so that an appropriate quantity of fuel is injected so as to implement the low temperature environment when the regeneration of the catalytic device is performed. Similarly, when the regeneration environment information contains the command containing the high temperature information (T-H), a high temperature control unit 522 performs a low temperature control so that a relatively large quantity of fuel is injected so as to implement the high temperature environment when the regeneration of the catalytic device is performed.

Hereinafter, an exemplary embodiment, in which the regeneration environment information is set by using information on the engine operation time, will be described with reference to FIG. 3. FIG. 3 is a diagram for describing an example, in which the regeneration cycle and a regeneration temperature of the catalytic device are set based on information on an engine operation time in the apparatus for post-processing exhaust gas for removing the sulfur oxides according to the exemplary embodiment of the present disclosure.

The engine operation time 110 is information about a time for which an engine is operated. The information on the engine operation time 110 is provided to a time calculation processing unit 210, and the time calculation processing unit 210 evaluates each of a short operation time and a long operation time, and compares and determines each of the evaluated short operation time and the evaluated long operation time. More particularly, the time calculation processing unit 210 includes a first time processing unit 212 and a second time processing unit 216. A short time reference value 214 is set in the first time processing unit 212 and a long time reference value 218 is set in the second time processing unit 216.

The long time reference value 218 may be set to a relatively longer time than the short time reference value 214. More particularly, the long time reference value 218 may be set to be 1.5 times to 20 times the short time reference value 214.

In the meantime, the short time reference value 214 makes the operation of removing the sulfur oxides be performed under the low temperature environment, and as illustrated in FIG. 1, the short time reference value 214 reflects the adsorption and the desorption of the relatively large quantity of sulfur oxides in the first temperature section that is the low temperature (T-L).

Similarly, the long time reference value 218 makes the operation of removing the sulfur oxides be performed under the high temperature environment, and as illustrated in FIG. 1, the long time reference value 218 reflects the adsorption and the desorption of the relatively small quantity of sulfur oxides in the second temperature section that is the high temperature (T-L). That is, the regeneration of the catalytic device is more frequently performed in the first temperature section, in which the quantity of oxide sulfur is relatively large, compared to the second temperature section.

On the other hand, the long time reference value 218 is set to be 1.5 times or more the short time reference value 214, so that it is possible to periodically remove the activated sulfur oxides in the second temperature section. To additionally describe, the relatively small quantity of sulfur oxides is produced in the second temperature section compared to the first temperature section, but when the sulfur oxides is continuously evaluated, the performance of the apparatus for post-processing exhaust gas deteriorates, so that the sulfur oxides needs to be appropriately removed at an appropriate time.

Further, the long time reference value 218 is set to be 20 times or less the short time reference value 214. Accordingly, in order to implement a temperature environment of the second temperature section that is a relatively high temperature compared to the first temperature section, the fuel injection quantity is increased, but the long time reference value 218 is restricted to be 20 times or less the short time reference value 214, so that it is possible to prevent the second temperature section from being frequently implemented and prevent the fuel from being excessively wasted.

For example, when it is assumed that the short time reference value 214 is set to 150 hrs and the long time reference value 218 is set to 500 hrs, information on the engine operation time 110 is continuously evaluated in the first and second time processing units 212 and 216. Then, when the evaluated operation time information reaches 150 hrs set as the short time reference value 214, a low temperature control command is given to the first processing unit 310. Then, the operation time information is continuously evaluated, and when the evaluated operation time information reaches 500 hrs set as the long time reference value 218, a high temperature control command is given to the second processing unit 320.

In the meantime, the low temperature control command may be generated just after the high temperature control command is generated, but in this case, the low temperature (T-L) control command may be ignored. The reason of ignoring the low temperature (T-L) control command is that when the high temperature environment is created and the operation of removing the sulfur oxides is performed, the sulfur oxides, which is activated to be adsorbed/desorbed at a relatively low temperature, is removed together.

In the meantime, when the low temperature control command is generated, the engine operation time evaluated in the first time processing unit 212 is initialized. Similarly, when the high temperature (T-H) control command is generated, the engine operation time evaluated in the second time processing unit 216 is initialized. Further, when the engine operation time evaluated in the second time processing unit 216 is initialized, the engine operation time evaluated in the first time processing unit 212 may be also initialized together, and the reason is that when the high temperature environment is created and the operation of removing the sulfur oxides is performed, the sulfur oxides, which is activated to be adsorbed/desorbed at a relatively low temperature, is removed together, as described above.

Hereinafter, an exemplary embodiment, in which the regeneration environment information is set by using information on an engine fuel consumption quantity, will be described with reference to FIG. 4. FIG. 4 is a diagram for describing an example, in which a regeneration cycle and a regeneration temperature of the catalytic device are set based on information on an engine fuel consumption quantity in the apparatus for post-processing exhaust gas for removing the sulfur oxides according to the exemplary embodiment of the present disclosure.

The engine fuel consumption quantity 120 is information on a degree of fuel consumed by an engine. Information on the engine fuel consumption quantity 120 is provided to a fuel quantity calculation processing unit 220, and the fuel quantity calculation processing unit 220 evaluates each of a small consumption quantity and a large consumption quantity and compares and determines each of the evaluated small consumption quantity and the evaluated large consumption quantity. More particularly, the fuel quantity calculation processing unit 220 includes a first fuel quantity processing unit 222 and a second fuel quantity processing unit 226. A small quantity reference value 224 is set in the first fuel quantity processing unit 222, and a large quantity reference value 228 is set in the second fuel quantity processing unit 226.

The large quantity reference value 228 may be set to a relatively larger quantity than the small quantity reference value 224. More particularly, the large quantity reference value 228 may be set to be 1.5 times to 10 times the small quantity reference value 224.

In the meantime, the small quantity reference value 224 makes the operation of removing the sulfur oxides be performed under the low temperature environment, and as illustrated in FIG. 1, the small quantity reference value 224 reflects the adsorption and the desorption of the relatively large quantity of sulfur oxides in the first temperature section that is the low temperature (T-L).

Similarly, the large quantity reference value 228 makes the operation of removing the sulfur oxides be performed under the high temperature environment, and as illustrated in FIG. 1, the large quantity reference value 228 reflects the adsorption and the desorption of the relatively small quantity of sulfur oxides in the second temperature section that is the high temperature (T-L). That is, the regeneration of the catalytic device is more frequently performed in the first temperature section, in which the quantity of oxide sulfur is relatively large, compared to the second temperature section.

On the other hand, the large quantity reference value 228 is set to be 1.5 times or more the small quantity reference value 224, so that it is possible to periodically remove the activated sulfur oxides in the second temperature section. To additionally describe, the relatively small quantity of sulfur oxides is produced in the second temperature section compared to the first temperature section, but when the sulfur oxides is continuously evaluated, the performance of the apparatus for post-processing exhaust gas deteriorates, so that the sulfur oxides needs to be appropriately removed at an appropriate time.

Further, the large quantity reference value 228 is set to be 10 times or less the small quantity reference value 224. Accordingly, in order to implement a temperature environment of the second temperature section that is a relatively high temperature compared to the first temperature section, the fuel injection quantity is increased, but the large quantity reference value 228 is restricted to be 10 times or less the small quantity reference value 224, so that it is possible to prevent the second temperature section from being frequently implemented and prevent the fuel from being excessively wasted.

For example, when it is assumed that the small quantity reference value 224 is set to 2,000 L and the large quantity reference value 228 is set to 10,000 L, information on the engine fuel consumption quantity 120 is continuously evaluated in the first and second fuel quantity processing units 222 and 226. Then, when the evaluated fuel consumption information reaches 2,000 L set as the small quantity reference value 224, a low temperature control command is given to the first processing unit 310. Then, the fuel consumption information is continuously evaluated, and when the evaluated fuel consumption information reaches 10,000 L set as the large quantity reference value 228, a high temperature control command is given to the second processing unit 320.

In the meantime, the low temperature control command may be generated just after the high temperature control command is generated, but in this case, the low temperature (T-L) control command may be ignored. The reason of ignoring the low temperature (T-L) control command is that when the high temperature environment is created and the operation of removing the sulfur oxides is performed, the sulfur oxides, which is activated to be adsorbed/desorbed at a relatively low temperature, is removed together.

On the other hand, when the low temperature control command is generated, the information on the engine fuel consumption quantity evaluated in the first fuel quantity processing unit 222 is initialized. Similarly, when the control command according to the high temperature (T-H) is generated, the information on the engine fuel consumption quantity evaluated in the second fuel quantity processing unit 226 is initialized. Further, when the engine fuel consumption quantity of the second fuel quantity processing unit 226 is initialized, the engine fuel consumption quantity of first fuel quantity processing unit 222 may be initialized together, and the reason is that when the high temperature environment is created and the operation of removing the sulfur oxides is performed, the sulfur oxides, which is activated to be adsorbed/desorbed at a relatively low temperature, is removed together, as described above.

Hereinafter, an exemplary embodiment, in which the regeneration environment information is set by using information on a vehicle trip distance, will be described with reference to FIG. 5. FIG. 5 is a diagram for describing an example, in which a regeneration cycle and a regeneration temperature of the catalytic device are set based on information on a vehicle trip distance in the apparatus for post-processing exhaust gas for removing the sulfur oxides according to the exemplary embodiment of the present disclosure.

The vehicle trip distance 130 is information on a degree of trip of a vehicle. Information on the vehicle trip distance 130 is provided to a distance calculation processing unit 230, and the distance calculation processing unit 230 evaluates a short distance and a long distance and compares and determines each of the evaluated short distance and the evaluated long distance. More particularly, the distance calculation processing unit 230 includes a first distance processing unit 232 and a second distance processing unit 236. A short distance reference value 234 is set in the first distance processing unit 232 and a long distance reference value 238 is set in the second distance processing unit 236.

The long distance reference value 238 may be set to relatively larger than the short distance reference value 234. More particularly, the long distance reference value 238 may be set to be 1.5 times to 5 times the short distance reference value 234.

In the meantime, the short distance reference value 234 makes the operation of removing the sulfur oxides be performed under the low temperature environment, and as illustrated in FIG. 1, the short distance reference value 234 reflects the adsorption and the desorption of the relatively large quantity of sulfur oxides in the first temperature section that is the low temperature (T-L).

Similarly, the long distance reference value 238 makes the operation of removing the sulfur oxides be performed under the high temperature environment, and as illustrated in FIG. 1, the long distance reference value 238 reflects the adsorption and the desorption of the relatively small quantity of sulfur oxides in the second temperature section that is the high temperature (T-L). That is, the regeneration of the catalytic device is more frequently performed in the first temperature section, in which the quantity of oxide sulfur is relatively large, compared to the second temperature section.

On the other hand, the long distance reference value 238 is set to be 1.5 times or more the short distance reference value 234, so that it is possible to periodically remove the activated sulfur oxides in the second temperature section. To additionally describe, the relatively small quantity of sulfur oxides is produced in the second temperature section compared to the first temperature section, but when the sulfur oxides is continuously evaluated, the performance of the apparatus for post-processing exhaust gas deteriorates, so that the sulfur oxides needs to be appropriately removed at an appropriate time.

Further, the long distance reference value 238 may be set to be 5 times or less the short distance reference value 234. Accordingly, in order to implement a temperature environment of the second temperature section that is a relatively high temperature compared to the first temperature section, the fuel injection quantity is increased, but the long distance reference value 238 is restricted to be 5 times or less the short distance reference value 234, so that it is possible to prevent the second temperature section from being frequently implemented and prevent the fuel from being excessively wasted.

For example, when it is assumed that the short distance reference value 234 is set to 5,000 km and the long distance reference value 238 is set to 25,000 km, information on the vehicle trip distance 130 is continuously evaluated in the first and second distance processing units 232 and 236. Then, when the evaluated trip distance information reaches 5,000 km set as the short distance reference value 234, a low temperature control command is given to the first processing unit 310. Then, the trip distance information is continuously evaluated, and when the evaluated trip distance information reaches 25,000 km set as the long distance reference value 238, a high temperature control command is given to the second processing unit 320.

In the meantime, the low temperature control command may be generated just after the high temperature control command is generated, but in this case, the low temperature (T-L) control command may be ignored. The reason for ignoring the low temperature control command is that when the high temperature environment is created and the operation of removing the sulfur oxides is performed, the sulfur oxides, which is activated to be adsorbed/desorbed at a relatively low temperature, is removed together.

In the meantime, when the low temperature control command is generated, information on an engine trip distance evaluated in the first distance processing unit 232 is initialized. Similarly, when the high temperature (T-H) control command is generated, information on an engine trip distance evaluated in the second distance processing unit 236 is initialized. Further, when the engine trip distance amount of the second distance processing unit 236 is initialized, the engine trip distance amount of the first distance processing unit 232 may also be initialized together, and the reason is that when the high temperature environment is created and the operation of removing the sulfur oxides is performed, the sulfur oxides, which is activated to be adsorbed/desorbed at a relatively low temperature, is removed together, as described above.

Hereinafter, an exemplary embodiment, in which the regeneration environment information is set by using information on sulfur oxides produced quantity, will be described with reference to FIG. 6. FIG. 6 is a diagram for describing an example, in which a regeneration cycle and a regeneration temperature of the catalytic device are set based on information on sulfur oxides produced quantity in the apparatus for post-processing exhaust gas for removing the sulfur oxides according to the exemplary embodiment of the present disclosure.

The sulfur oxides produced quantity 140 is information on a degree of quantity of sulfur oxides produced. Information on the sulfur oxides produced quantity 140 is provided to sulfur oxides quantity calculation processing unit 240, and the sulfur oxides quantity calculation processing unit 240 evaluates the information on the sulfur oxides produced quantity 140 according to the form of catalyst and compares and determines the evaluated information on the sulfur oxides produced quantity 140. More particularly, the sulfur oxides quantity calculation processing unit 240 determines a degree of sulfur oxides produced with reference to DOC inlet exhaust gas temperature information 142 and SCR inlet exhaust gas temperature information 144. Accordingly, it is possible to more accurately recognize a degree of sulfur oxides, which needs to be actually removed.

The sulfur oxides quantity calculation processing unit 240 includes a DOC calculation processing unit 250 and an SCR calculation processing unit 260.

The DOC calculation processing unit 250 includes a DOC sulfur oxides storage quantity calculating unit 252, and sulfur oxides quantity reference value 256 is set in the DOC calculation processing unit 250. The DOC sulfur oxides storage quantity calculating unit 252 calculates a degree of sulfur oxides stored in the DOC based on the sulfur oxides produced quantity information collected from the sulfur oxides produced quantity 140 and the DOC inlet exhaust gas temperature information 142. That is, since the sulfur oxides may be naturally desorbed and removed, or absorbed and stored according to the DOC inlet exhaust gas temperature, the DOC inlet exhaust gas temperature information is referred.

Then, the information on the sulfur oxides quantity calculated in the DOC calculation processing unit 250 is provided to sulfur oxides quantity processing unit 258.

The sulfur oxides quantity provided from the DOC calculation processing unit 250 is evaluated in the sulfur oxides quantity processing unit 258, and the sulfur oxides quantity processing unit 258 compares and determines the evaluated sulfur oxides quantity with sulfur oxides quantity reference value 256. When the evaluated sulfur oxides quantity reaches the sulfur oxides quantity reference value 256, the sulfur oxides quantity processing unit 258 gives the low temperature control command to the first processing unit 310. Then, the information on the sulfur quantity evaluated in the sulfur oxides quantity processing unit 258 is initialized after the low temperature control command is generated. The sulfur oxides reference value 256 may be set to, for example, 20 g. That is, the sulfur oxides quantity processing unit 258 determines whether the evaluated sulfur oxides quantity reaches 20 g, and when the evaluated sulfur oxides quantity reaches 20 g, the sulfur oxides quantity processing unit 258 initializes the information on the evaluated sulfur oxides quantity and gives the low temperature control command.

When the low temperature control command is given, the information on the sulfur oxides quantity evaluated in each of the DOC sulfur oxides storage quantity calculating unit 252 and the sulfur oxides quantity processing unit 258 is initialized.

The SCR calculation processing unit 260 calculates first and second sulfur oxides quantities based on the sulfur oxides produced quantity 140, the SCR inlet exhaust gas temperature information 144, and the information on the sulfur oxides quantity calculated by the DOC sulfur oxides storage quantity calculating unit 252. The SCR calculation processing unit 260 calculates each of the first sulfur oxides quantity and the second sulfur oxides quantity.

The first sulfur oxides quantity is calculated by collecting a first sulfur oxides adsorption characteristic 261a, a first sulfur oxides desorption characteristic 261b, the sulfur oxides produced quantity 140, the SCR inlet exhaust gas temperature information 144, and the information on the sulfur oxides quantity calculated by the DOC sulfur oxides storage quantity calculating unit 252. The reason is that the first sulfur oxides quantity is changed and stored according to a temperature environment and an originally existing first sulfur oxides quantity.

In the meantime, a first sulfur oxides storage quantity processing unit 264a refers to a first sulfur oxides quantity reference value 266a. The first sulfur oxides quantity reference value 266a may be set to, for example, 25g. That is, a first sulfur oxides quantity processing unit 268a determines whether the evaluated first sulfur oxides quantity reaches 25g, and when the evaluated first sulfur oxides quantity reaches 25 g, the first sulfur oxides quantity processing unit 268a initializes the information on the evaluated first sulfur oxides quantity and gives the low temperature control command.

When the low temperature control command is given, the information on the first sulfur oxides quantity evaluated in each of the first sulfur oxides storage quantity processing unit 264a and the first sulfur oxides quantity processing unit 268a is initialized.

Similarly, a second sulfur oxides storage quantity processing unit 264b calculates a second sulfur oxides quantity. The second sulfur oxides storage quantity processing unit 264b calculates the second sulfur oxides quantity by collecting a second sulfur oxides adsorption characteristic 262a, a second sulfur oxides desorption characteristic 262b, the sulfur oxides produced quantity 140, the SCR inlet exhaust gas temperature information 144, and the information on the sulfur oxides quantity calculated by the DOC sulfur oxides storage quantity calculating unit 252. The reason is that the second sulfur oxides quantity is changed and stored according to a temperature environment and an originally existing second sulfur oxides quantity.

In the meantime, a second sulfur oxides storage quantity processing unit 264b refers to a second sulfur oxides quantity reference value 266b. The second sulfur oxides quantity reference value 266b may be set to, for example, 10g. That is, the second sulfur oxides quantity processing unit 268b determines whether the evaluated second sulfur oxides quantity reaches 10g, and when the evaluated second sulfur oxides quantity reaches 10 g, the second sulfur oxides quantity processing unit 268b initializes the information on the evaluated second sulfur oxides quantity and gives the command according to the high temperature (T-H).

When the high temperature control command is given, the information on the second sulfur oxides quantity evaluated in each of the second sulfur oxides storage quantity processing unit 264b and the second sulfur oxides quantity processing unit 268b is initialized.

In the meantime, the low temperature control command may be generated just after the high temperature control command is generated, but in this case, the low temperature (T-L) control command may be ignored. The reason of ignoring the low temperature (T-L) control command is that when the high temperature environment is created and the operation of removing the sulfur oxides is performed, the sulfur oxides, which is activated to be adsorbed/desorbed at a relatively low temperature, is removed together.

On the other hand, when the control command according to the high temperature (T-H) is generated, the information on the sulfur oxides quantity evaluated in each of the DOC sulfur oxides storage quantity calculating unit 252 and the sulfur oxides quantity processing unit 258 is initialized, and the information on the first sulfur oxides quantity evaluated in each of the first sulfur oxides storage quantity processing unit 264a and the first sulfur oxides quantity processing unit 268a may be initialized together. The reason is that when the high temperature environment is created and the operation of removing the sulfur oxides is performed, the sulfur oxides, which is activated to be adsorbed/desorbed at a relatively low temperature, is removed together.

The sulfur oxides caused from the fuel and the engine oil is adsorbed to a catalyst in the form of sulfur oxides to degrade performance, and has a characteristic in that an adsorption rate of the sulfur oxides to the catalyst is different according to the kind of catalyst and the form of sulfur oxides.

Accordingly, the apparatus for post-processing exhaust gas for removing the sulfur oxides according to the exemplary embodiment of the present disclosure may separate and control a regeneration cycle and a regeneration temperature of the apparatus for post-processing exhaust gas even though the sulfur oxides has a different characteristic according to the form of sulfur oxides, thereby removing most of the sulfur oxides.

Further, since the amount of components of the sulfur oxides removed at a high temperature is relatively smaller than the amount of components of the sulfur oxides removed at a low temperature, it is possible to prevent the waste of fuel consumed when removing the sulfur oxides by setting a cycle implementing a high temperature to be long and frequently setting a cycle implementing a low temperature.

Further, it is possible to prevent the waste of additionally consumed fuel by ignoring a control cycle resulting from a low temperature when a high temperature is implemented.

The exemplary embodiments of the present disclosure have been described with reference to the accompanying drawings, but those skilled in the art will understand that the present disclosure may be implemented in another specific form without changing the technical spirit or essential feature thereof.

Accordingly, it will be understood that the aforementioned exemplary embodiments are described for illustration in all aspects and are not limited, and it should be interpreted that the scope of the present disclosure shall be represented by the claims to be described below, and all of the changes or modified forms induced from the meaning and the scope of the claims, and an equivalent concept thereof are included in the scope of the present disclosure.

The apparatus for post-processing exhaust gas for removing the sulfur oxides according to the exemplary embodiment of the present disclosure may be used for removing sulfur oxides in a catalytic device when being regenerated.

## Claims

1. An apparatus for post-processing exhaust gas for removing sulfur oxides, the apparatus comprising:
a catalytic device including a diesel oxidation catalyst (DOC) and a selective catalytic reduction (SCR);
an input unit (100) configured to receive one or more elements of operation information of a vehicle among an engine operation time (110), an engine fuel consumption quantity (120), a vehicle trip distance (130), and sulfur oxides produced quantity (140);
a memory unit (200) configured to store a first operation information value for processing sulfur oxides and a second operation information value for processing sulfur oxides, wherein the first operation information value and the second operation information value are generated by evaluating the operation information received from the input unit (100);
a first processing unit (310) configured to determine whether the first operation information value stored in the memory unit (200) reaches a predetermined first reference value, and command a low temperature control when the first operation information value reaches the first reference value;
a second processing unit (320) configured to determine whether the second operation information value stored in the memory unit (200) reaches a predetermined second reference value, and command a high temperature control when the second operation information value reaches the predetermined second reference value; **characterised by** a sulfur oxides removal operating unit (500) configured to remove a first sulfur oxides by heating the catalytic device under a first temperature condition when the low temperature control command is generated from the first processing unit (310), and remove the first sulfur oxides and a second sulfur oxides which is different from the first sulfur oxides and removed at a higher temperature than the first sulfur oxides by heating the catalytic device under a second temperature condition when the high temperature control command is generated from the second processing unit (320).

2. The apparatus of claim 1, wherein the first processing unit initializes the first operation information value of the memory unit after the low temperature control command is generated, and
the second processing unit initializes the second operation information value of the memory unit after the high temperature control command is generated.

3. The apparatus of claim 2, wherein when the second processing unit initializes the second operation information value of the memory unit, the second processing unit initializes the first operation information value of the memory unit together.

4. The apparatus of claim 1, wherein in the sulfur oxides removal operating unit 500, the first temperature condition is 400°C or higher and the second temperature condition is 600°C or higher.

5. The apparatus of claim 1, wherein the predetermined first reference value is smaller than the second reference value.

6. The apparatus of claim 1, further comprising:
a manual control unit configured to generate a high temperature control command,
wherein when the high temperature control command is generated from the manual control unit, the first sulfur oxides and the second sulfur oxides are removed by heating the catalytic device under the second temperature condition, and the first operation information value and the second operation information value of the memory unit are initialized.

7. A method for post-processing exhaust gas for removing sulfur oxides, the method comprising:
purifying exhaust gas using a catalytic device including a diesel oxidation catalyst (DOC) and a selective catalytic reduction (SCR);
an input operation of receiving one or more elements of operation information of a vehicle among an engine operation time (110), an engine fuel consumption quantity (120), a vehicle trip distance (130), and sulfur oxides produced quantity (140) from an input unit (100);
an evaluating operation of generating a first operation information value for processing sulfur oxides and a second operation information value for processing sulfur oxides by evaluating the operation information received from the input operation;
a first command operation of determining whether the first operation information value evaluated in the evaluating operation reaches a predetermined first reference value, and commanding a low temperature control when the first operation information value reaches the predetermined first reference value;
a second command operation of determining whether the second operation information value evaluated in the evaluating operation reaches a predetermined second reference value, and commanding a high temperature control when the second operation information value reaches the predetermined second reference value;
a first removal operation of removing a first sulfur oxides by heating the catalytic device under a first temperature condition when the low temperature control command is generated in the first command operation; and
a second removal operation of removing the first sulfur oxides and a second sulfur oxides which is different from the first sulfur oxides and removed at a higher temperature than the first sulfur oxides by heating the catalytic device under a second temperature condition when the high temperature control command is generated in the second command operation.

8. The method of claim 7, further comprising:
initializing the first operation information value after the low temperature control command is generated; and
initializing the second operation information value after the high temperature control command is generated.

9. The method of claim 8, wherein when the second operation information value is initialized, the first operation information value is initialized together.

10. The method of claim 7, wherein when the received operation information is the sulfur oxides produced quantity (140), the first reference value is sulfur oxides storage quantity of a DOC or a first sulfur oxides storage quantity, and the second reference value is a second sulfur oxides storage quantity.

11. The method of claim 7, wherein the first temperature condition is 400°C or higher and the second temperature condition is 600°C or higher.

12. The method of claim 7, wherein the predetermined first reference value is smaller than the second reference value.

13. The method of claim 7, wherein a manual control unit generating a high temperature control command is further included, and
the method further includes, when the high temperature control command is generated from the manual control unit, removing the first sulfur oxides and the second sulfur oxides by heating the catalytic device under the second temperature condition, and initializing the first operation information value and the second operation information value.

## Patentansprüche

1. Vorrichtung zum Nachbearbeiten von Abgas zum Entfernen von Schwefeloxiden, wobei die Vorrichtung Folgendes umfasst:
eine katalytische Einrichtung, die einen Dieseloxidationskatalysator (DOC) und eine selektive katalytische Reduktion (SCR) aufweist,
eine Eingabeeinheit (100), die ausgestaltet ist, um ein oder mehrere Betriebsinformationselemente eines Fahrzeugs zu empfangen, darunter eine Motorbetriebszeit (110), eine Motorkraftstoffverbrauchsmenge (120), eine zurückgelegte Fahrzeugwegstrecke (130) und eine produzierte Schwefeloxidmenge (140),
eine Speichereinheit (200), die ausgestaltet ist, um einen ersten Betriebsinformationswert zum Verarbeiten von Schwefeloxiden und einen zweiten Betriebsinformationswert zum Verarbeiten von Schwefeloxiden zu speichern, wobei der erste Betriebsinformationswert und der zweite Betriebsinformationswert durch Bewerten der Betriebsinformationen erzeugt werden, die von der Eingabeeinheit (100) empfangen werden,
eine erste Verarbeitungseinheit (310), die ausgestaltet ist, um zu bestimmen, ob der erste Betriebsinformationswert, der in der Speichereinheit (200) gespeichert ist, einen vorbestimmten ersten Referenzwert erreicht, und eine Steuerung für niedrige Temperatur zu befehlen, wenn der erste Betriebsinformationswert den ersten Referenzwert erreicht,
eine zweite Verarbeitungseinheit (320), die ausgestaltet ist, um zu bestimmen, ob der zweite Betriebsinformationswert, der in der Speichereinheit (200) gespeichert ist, einen vorbestimmten zweiten Referenzwert erreicht, und eine Steuerung für hohe Temperatur zu befehlen, wenn der zweite Betriebsinformationswert den vorbestimmten zweiten Referenzwert erreicht,
**gekennzeichnet durch** eine Schwefeloxid-Entfernungsbetriebseinheit (500), die ausgestaltet ist, um ein erstes Schwefeloxide durch Erwärmen der katalytischen Einrichtung unter einer ersten Temperaturbedingung zu entfernen, wenn der Steuerbefehl für niedrige Temperatur von der ersten Verarbeitungseinheit (310) erzeugt wird, und das erste Schwefeloxide und ein zweites Schwefeloxide zu entfernen, das sich von dem ersten Schwefeloxide unterscheidet und bei einer höheren Temperatur entfernt wird als das erste Schwefeloxide durch Erwärmen der katalytischen Einrichtung unter einer zweiten Temperaturbedingung, wenn der Steuerbefehl für hohe Temperatur von der zweiten Verarbeitungseinheit (320) erzeugt wird.

2. Vorrichtung nach Anspruch 1, wobei die erste Verarbeitungseinheit den ersten Betriebsinformationswert der Speichereinheit initialisiert, nachdem der Steuerbefehl für niedrige Temperatur erzeugt ist, und
die zweite Verarbeitungseinheit den zweiten Betriebsinformationswert der Speichereinheit initialisiert, nachdem der Steuerbefehl für hohe Temperatur erzeugt ist.

3. Vorrichtung nach Anspruch 2, wobei, wenn die zweite Verarbeitungseinheit den zweiten Betriebsinformationswert der Speichereinheit initialisiert, die zweite Verarbeitungseinheit den ersten Betriebsinformationswert der Speichereinheit zusammen initialisiert.

4. Vorrichtung nach Anspruch 1, wobei in der Schwefeloxid-Entfernungsbetriebseinheit 500 die erste Temperaturbedingung 400 °C oder mehr beträgt und die zweite Temperaturbedingung 600°C oder mehr beträgt.

5. Vorrichtung nach Anspruch 1, wobei der vorbestimmte erste Referenzwert kleiner ist als der zweite Referenzwert.

6. Vorrichtung nach Anspruch 1, ferner umfassend:
eine manuelle Steuereinheit, die ausgestaltet ist, um einen Steuerbefehl für hohe Temperatur zu erzeugen, wobei, wenn der Steuerbefehl für hohe Temperatur von der manuellen Steuereinheit erzeugt wird, die ersten Schwefeloxide und die zweiten Schwefeloxide durch Erwärmen der katalytischen Einrichtung unter der zweiten Temperaturbedingung entfernt werden und der erste Betriebsinformationswert und der zweite Betriebsinformationswert der Speichereinheit initialisiert werden.

7. Verfahren zum Nachbearbeiten von Abgas zum Entfernen von Schwefeloxiden, wobei das Verfahren Folgendes umfasst:
Reinigen von Abgas unter Verwendung einer katalytischen Einrichtung, die einen Dieseloxidationskatalysator (DOC) und eine selektive katalytische Reduktion (SCR) aufweist, einen Eingabebetrieb zum Empfangen eines oder mehrerer Betriebsinformationselemente eines Fahrzeugs, darunter eine Motorbetriebszeit (110), eine Motorkraftstoffverbrauchsmenge (120), eine zurückgelegte Fahrzeugwegstrecke (130) und eine produzierte Schwefeloxidmenge (140), von einer Eingabeeinheit (100),
einen Bewertungsbetrieb zum Erzeugen eines ersten Betriebsinformationswerts zum Verarbeiten von Schwefeloxiden und eines zweiten Betriebsinformationswerts zum Verarbeiten von Schwefeloxiden durch Bewerten der Betriebsinformationen, die von dem Eingabebetrieb empfangen werden,
einen ersten Befehlsbetrieb zum Bestimmen, ob der erste Betriebsinformationswert, der in dem Bewertungsbetrieb bewertet wird, einen vorbestimmten ersten Referenzwert erreicht, und Befehlen einer Steuerung für niedrige Temperatur, wenn der erste Betriebsinformationswert den vorbestimmten ersten Referenzwert erreicht,
einen zweiten Befehlsbetrieb zum Bestimmen, ob der zweite Betriebsinformationswert, der in dem Bewertungsbetrieb bewertet wird, einen vorbestimmten zweiten Referenzwert erreicht, und Befehlen einer Steuerung für hohe Temperatur, wenn der zweite Betriebsinformationswert den vorbestimmten zweiten Referenzwert erreicht,
einen ersten Entfernungsbetrieb zum Entfernen eines ersten Schwefeloxide durch Erwärmen der katalytischen Einrichtung unter einer ersten Temperaturbedingung, wenn der Steuerbefehl für niedrige Temperatur in dem ersten Befehlsbetrieb erzeugt wird, und
einen zweiten Entfernungsbetrieb zum Entfernen des ersten Schwefeloxide und eines zweiten Schwefeloxide, das sich von dem ersten Schwefeloxide unterscheidet und bei einer höheren Temperatur entfernt wird als das erste Schwefeloxide durch Erwärmen der katalytischen Einrichtung unter einer zweiten Temperaturbedingung, wenn der Steuerbefehl für hohe Temperatur in dem zweiten Befehlsbetrieb erzeugt wird.

8. Verfahren nach Anspruch 7, das ferner Folgendes umfasst:
Initialisieren des ersten Betriebsinformationswerts,
nachdem der Steuerbefehl für niedrige Temperatur erzeugt ist, und
Initialisieren des zweiten Betriebsinformationswerts, nachdem der Steuerbefehl für hohe Temperatur erzeugt ist.

9. Verfahren nach Anspruch 8, wobei, wenn der zweite Betriebsinformationswert initialisiert wird, der erste Betriebsinformationswert zusammen initialisiert wird.

10. Verfahren nach Anspruch 7, wobei, wenn die empfangenen Betriebsinformationen die produzierte Schwefeloxidmenge (140) ist, der erste Referenzwert eine Schwefeloxidspeichermenge eines DOC oder eine erste Schwefeloxidspeichermenge ist und der zweite Referenzwert eine zweite Schwefeloxidspeichermenge ist.

11. Verfahren nach Anspruch 7, wobei die erste Temperaturbedingung 400 °C oder mehr beträgt und die zweite Temperaturbedingung 600 °C oder mehr beträgt.

12. Verfahren nach Anspruch 7, wobei der vorbestimmte erste Referenzwert kleiner ist als der zweite Referenzwert.

13. Verfahren nach Anspruch 7, wobei eine manuelle Steuereinheit, die einen Steuerbefehl für hohe Temperatur erzeugt, ferner vorgesehen ist und
das Verfahren ferner, wenn der Steuerbefehl für hohe Temperatur von der manuellen Steuereinheit erzeugt wird, ein Entfernen der ersten Schwefeloxide und der zweiten Schwefeloxide durch Erwärmen der katalytischen Einrichtung unter der zweiten Temperaturbedingung und ein Initialisieren des ersten Betriebsinformationswerts und des zweiten Betriebsinformationswerts aufweist.

## Revendications

1. Appareil de post-traitement de gaz d'échappement, destiné à éliminer des oxydes de soufre, l'appareil comprenant :
un dispositif catalytique comportant un catalyseur d'oxydation diesel (DOC, *diesel oxidation catalyst*) et une réduction catalytique sélective (SCR, *selective catalytic reduction*) ;
une unité d'entrée (100) conçue pour recevoir un ou plusieurs éléments d'information de fonctionnement d'un véhicule parmi un temps de fonctionnement de moteur (110), une quantité de consommation de carburant de moteur (120), une distance de trajet de véhicule (130), et une quantité d'oxydes de soufre produits (140) ;
une unité de mémoire (200) conçue pour stocker une première valeur d'information de fonctionnement destinée au traitement d'oxydes de soufre et une seconde valeur d'information de fonctionnement destinée au traitement d'oxydes de soufre, dans lequel la première valeur d'information de fonctionnement et la seconde valeur d'information de fonctionnement sont engendrées par évaluation des informations de fonctionnement reçues à partir de l'unité d'entrée (100) ;
une première unité de traitement (310) conçue pour déterminer si la première valeur d'information de fonctionnement stockée dans l'unité de mémoire (200) atteint une première valeur de référence prédéterminée, et commander une régulation à basse température lorsque la première valeur d'information de fonctionnement atteint la première valeur de référence ;
une seconde unité de traitement (320) conçue pour déterminer si la seconde valeur d'information de fonctionnement stockée dans l'unité de mémoire (200) atteint une seconde valeur de référence prédéterminée, et commander une régulation à haute température lorsque la seconde valeur d'information de fonctionnement atteint la seconde valeur de référence prédéterminée ;
**caractérisé par** une unité fonctionnelle d'élimination d'oxydes de soufre (500) conçue pour éliminer un premier oxydes de soufre en chauffant le dispositif catalytique à la première condition de température lorsque la commande de régulation à basse température est engendrée à partir de la première unité de traitement (310), et éliminer le premier oxydes de soufre et un second oxydse de soufre qui est différent du premier oxydes de soufre et qui s'élimine à plus haute température que le premier oxydes de soufre, en chauffant le dispositif catalytique à une seconde condition de température lorsque la commande de régulation à haute température est engendrée à partir de la seconde unité de traitement (320).

2. Appareil selon la revendication 1, dans lequel la première unité de traitement initialise la première valeur d'information de fonctionnement de l'unité de mémoire, après que la commande de régulation à basse température a été engendrée, et
la seconde unité de traitement initialise la seconde valeur d'information de fonctionnement de l'unité de mémoire, après que la commande de régulation à haute température a été engendrée.

3. Appareil selon la revendication 2, dans lequel lorsque la seconde unité de traitement initialise la seconde valeur d'information de fonctionnement de l'unité de mémoire, la seconde unité de traitement initialise la première valeur d'information de fonctionnement de l'unité de mémoire en même temps.

4. Appareil selon la revendication 1, dans lequel dans l'unité fonctionnelle d'élimination d'oxydes de soufre (500), la première condition de température est supérieure ou égale à 400 °C et la seconde condition de température est supérieure ou égale à 600 °C.

5. Appareil selon la revendication 1, dans lequel la première valeur de référence prédéterminée est inférieure à la seconde valeur de référence.

6. Appareil selon la revendication 1, comprenant en outre :
une unité de régulation manuelle conçue pour engendrer une commande de régulation à haute température,
dans lequel lorsque la commande de régulation à haute température est engendrée à partir de l'unité de régulation manuelle, les premiers oxydes de soufre et les seconds oxydes de soufre sont éliminés par chauffage du dispositif catalytique à la seconde condition de température, et la première valeur d'information de fonctionnement et la seconde valeur d'information de fonctionnement de l'unité de mémoire sont initialisées.

7. Procédé de post-traitement de gaz d'échappement pour éliminer des oxydes de soufre, le procédé comprenant les étapes suivantes :
purifier un gaz d'échappement à l'aide d'un dispositif catalytique comportant un catalyseur d'oxydation diesel (DOC) et une réduction catalytique sélective (SCR) ;
une opération d'entrée consistant à recevoir un ou plusieurs éléments d'information de fonctionnement d'un véhicule parmi un temps de fonctionnement de moteur (110), une quantité de consommation de carburant de moteur (120), une distance de trajet de véhicule (130), et une quantité d'oxydes de soufre produits (140) à partir d'une unité d'entrée (100) ;
une opération d'évaluation consistant à engendrer une première valeur d'information de fonctionnement destinée au traitement d'oxydes de soufre et une seconde valeur d'information de fonctionnement destinée au traitement d'oxydes de soufre, en évaluant les informations de fonctionnement reçues à partir de l'opération d'entrée ;
une première opération de commande consistant à déterminer si la première valeur d'information de fonctionnement évaluée lors de l'opération d'évaluation atteint une première valeur de référence prédéterminée, et à commander une régulation à basse température lorsque la première valeur d'information de fonctionnement atteint la première valeur de référence prédéterminée ;
une seconde opération de commande consistant à déterminer si la seconde valeur d'information de fonctionnement évaluée lors de l'opération d'évaluation atteint une seconde valeur de référence prédéterminée, et à commander une régulation à haute température lorsque la seconde valeur d'information de fonctionnement atteint la seconde valeur de référence prédéterminée ;
une première opération d'élimination consistant à éliminer un premier oxydes de soufre en chauffant le dispositif catalytique à une première condition de température, lorsque la commande de régulation à basse température est engendrée lors de la première opération de commande ; et
une seconde opération d'élimination consistant à éliminer le premier oxydes de soufre et un second oxydes de soufre qui est différent du premier oxydes de soufre et qui s'élimine à plus haute température que le premier oxydes de soufre, en chauffant le dispositif catalytique à une seconde condition de température, lorsque la commande de régulation à haute température est engendrée lors de la seconde opération de commande.

8. Procédé selon la revendication 7, comprenant en outre les étapes suivantes :
initialiser la première valeur d'information de fonctionnement, après que la commande de régulation à basse température a été engendrée ; et
initialiser la seconde valeur d'information de fonctionnement, après que la commande de régulation à haute température a été engendrée.

9. Procédé selon la revendication 8, dans lequel lorsque la seconde valeur d'information de fonctionnement est initialisée, la première valeur d'information de fonctionnement est initialisée en même temps.

10. Procédé selon la revendication 7, dans lequel lorsque les informations de fonctionnement reçues sont la quantité d'oxydes de soufre produits (140), la première valeur de référence est la quantité de stockage d'oxyde de soufre d'un catalyseur DOC ou une quantité de stockage de premier oxyde de soufre, et la seconde valeur de référence est une quantité de stockage de second oxyde de soufre.

11. Procédé selon la revendication 7, dans lequel la première condition de température est supérieure ou égale à 400 °C et la seconde condition de température est supérieure ou égale à 600 °C.

12. Procédé selon la revendication 7, dans lequel la première valeur de référence prédéterminée est inférieure à la seconde valeur de référence.

13. Procédé selon la revendication 7, dans lequel est en outre incluse une unité de régulation manuelle engendrant une commande de régulation à haute température, et
le procédé inclut en outre, lorsque la commande de régulation à haute température est engendrée à partir de l'unité de régulation manuelle, l'élimination des premiers oxydes de soufre et des seconds oxydes de soufre, par chauffage du dispositif catalytique à la seconde condition de température, et l'initialisation de la première valeur d'information de fonctionnement et de la seconde valeur d'information de fonctionnement.
